(19) Europäisches Patentamt
European Patent Office
Office européen des brevets

(11) **EP 2 861 080 B1**

(12) **EUROPEAN PATENT SPECIFICATION**

(45) Date of publication and mention
of the grant of the patent:
**26.04.2017 Bulletin 2017/17**

(51) Int Cl.:
*A23C 9/142* *(2006.01)*        *A23C 9/152* *(2006.01)*
*A23C 19/05* *(2006.01)*        *A23J 1/20* *(2006.01)*

(21) Application number: **13733965.1**

(22) Date of filing: **14.06.2013**

(86) International application number:
**PCT/EP2013/062407**

(87) International publication number:
**WO 2013/186376 (19.12.2013 Gazette 2013/51)**

(54) **MILK PRODUCTS WITH INCREASED WATER BINDING**

MILCHPRODUKTE MIT ERHÖHTER WASSERBINDUNG

PRODUITS LAITIERS À CAPACITÉ DE FIXATION D'EAU AUGMENTÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2012 DK 201270334
22.06.2012 EP 12173179
19.10.2012 EP 12189320**

(43) Date of publication of application:
**22.04.2015 Bulletin 2015/17**

(73) Proprietor: **Arla Foods Amba
8260 Viby J (DK)**

(72) Inventors:
• **SØRENSEN, Hanne, Theil
DK-8740 Brædstrup (DK)**
• **HOLST, Hans, Henrik
DK-6920 Videbæk (DK)**
• **KØNIGSFELDT, Preben, Busch
DK-8362 Hørning (DK)**

(74) Representative: **Zacco Denmark A/S
Arne Jacobsens Allé 15
2300 Copenhagen S (DK)**

(56) References cited:
WO-A1-2008/136671        WO-A1-2012/110706
US-A1- 2003 077 357        US-A1- 2010 303 958

• GOVINDASAMY-LUCEY S ET AL: "Use of Cold Microfiltration Retentates Produced with Polymeric Membranes for Standardization of Milks for Manufacture of Pizza Cheese", JOURNAL OF DAIRY SCIENCE, AMERICAN DAIRY SCIENCE ASSOCIATION, US, vol. 90, no. 10, 1 October 2007 (2007-10-01), pages 4552-4568, XP026956200, ISSN: 0022-0302 [retrieved on 2007-10-01]
• ROACH ET AL: "Disruption and sedimentation of casein micelles and casein micelle isolates under high-pressure homogenization", INNOVATIVE FOOD SCIENCE AND EMERGING TECHNOLOGIES, ELSEVIER, AMSTERDAM, NL, vol. 9, no. 1, 26 November 2007 (2007-11-26), pages 1-8, XP022361823, ISSN: 1466-8564, DOI: 10.1016/J.IFSET.2007.03.027
• THOM HUPPERTZ ET AL: "Disruption and Reassociation of Casein Micelles under High Pressure: Influence of Milk Serum Composition and Casein Micelle Concentration", JOURNAL OF AGRICULTURAL AND FOOD CHEMISTRY, vol. 54, no. 16, 1 August 2006 (2006-08-01), pages 5903-5909, XP055061660, ISSN: 0021-8561, DOI: 10.1021/jf060689c

## Description

### Technical field of the invention

The present invention relates to a novel modified casein concentrate having high water binding capacity, to a process for preparing a modified casein concentrate and to a novel cheese or dairy product.

### Background of the invention

Casein is the dominant protein in bovine milk and accounts for about 80 % of the total protein. Skimmed milk comprises about 3.5 % protein, of which casein accounts for about 2.8 %, and serum proteins accounts for about 0.7 %. Casein is relatively hydrophobic and therefore poorly soluble in water. Casein is found in milk as a suspension of particles, the casein micelles, having hydrophilic parts residing at the surface. The caseins in the micelles are held together by calcium ions and hydrophobic interactions. The enzymes involved in milk-clotting act on the surface of the micelles as do other conversions of the milk constituents.

Traditional cheese-making, which converts milk to a cheese curd, normally comprises destabilisation of the casein micelles by addition of lactic acid bacteria (LAB's) and rennet enzymes followed by after-treatment, ripening, etc. The quality, texture and diversity of the final cheese depend on the starting milk, on the milk processing, and the cheese technology. Important quality parameters in the final product are the structure and water content. The control of pH and calcium in the milk and in the final product is important for those parameters.

In traditional manufacturing of cheese, a concentration of the protein takes place in the cheese vat as a consequence of the syneresis and the subsequent pressing. The concentration step of cheese production can alternatively be replaced by the use of membrane-filtered milk. Concentration can be carried out by ultrafiltration (UF) or by microfiltration (MF). Casein and whey proteins are concentrated proportionally by UF, whereas the whey proteins are removed with the permeate during MF. Microfiltration thus makes it possible to concentrate the casein fraction in skim milk and to deplete the retentate of whey proteins. However, the structure of MF cheese is not well understood and, in order to design a process for production of MF cheese, it is crucial to understand the interactions between protein, water and calcium in the concentrate as well as in the cheese.

MF cheese is a relatively new area of research and there are only a few reports describing properties of MF cheese. The functionality and structure have been investigated by Ardisson-Korat & Rizvi, 2004; Brandsma & Rizvi, 2001 a, b; Neocleous, Barbano, & Rudan, 2002a, b; Larsson, 2004; Nelson & Barbano, 2005. The physico-chemical characteristic of UF retentate was studied in some detail by e.g. Bienvenue, Jimenez-Flores, & Singh, 2003; Fox & McSweeney, 1998; Karlsson, 2005, while the physico-chemical characteristics of MF concentrate are still poorly investigated.

Solanki & Rizvi (2001) found that membrane filtration increased the phosphate concentration and hence the buffer capacity. They also note that the increase in protein concentration (primarily casein) resulting from using MF and the concomitant reduction in whey protein greatly affected the physico-chemical properties of the skim milk retentate, which exhibited shear-thinning behaviour between 11 and 17% solids concentration. The volume fraction itself depends on factors such as the degree of hydration of the protein besides protein content and composition. Retentate at higher pH (pH 6.5 versus pH 6.0) exhibited a higher solid content, but more importantly, a higher amount of protein and ash, which reflected in a higher density. Solanki & Rizvi (2001) also found that the main contributor to viscosity was casein and retentate viscosity was reduced by treatments that decreased the stability of the casein (addition of NaCl or citrate, reduction of pH) and consequently altered the structural conformation of the casein micelles.

US 2003/0077357 describes a microfiltration of skim milk for cheese making involving a pH reduction effected by adding acidulant and/or starter culture to the skim milk/rententate being processed thereby causing an increased amount of calcium in the retentate and providing a ratio of calcium to protein in the retentate desired for cheese making. The pH value during the microfiltration process is in the range of 5.8 to 6.4.

WO 2012/110706 relates to a method for producing cheese comprising subjecting milk raw material to microfiltration and pre-acidification to produce an acidified casein concentrate, where the microfiltration is performed prior to or simultaneously with the pre-acidification, concentrating the acidified casein concentrate to produce a full concentrated pre-cheese. The acidified concentrate had a pH value of 5.7.

Harte et al (Innovative Food Science and Emerging Technologies 9 (2008) 1-8) describes the disruption and sedimentation of casein micelles and casein micelle isolates under high-pressure homogenization. The skim milk is subject to microfiltration and high-pressure homogenization at an adjusted pH value of 6.7. HPH resulted in the increase of particle size and aggregation of casein micelles at elevated pressures from 250 MPa.

Govindasamy-Lucey et al. (use of cold microfitration retentates produced with polymeric membranes for standardization of milks for manufacture of pizza cheese, Journal of dairy science, American Dairy Science Association, US, vol 90, no. 10, 1 October 20107, pages 4552-4568, XP026956200) discloses milk microfiltration retentates acidified to pH 6.4 or 6.3 and the uses thereof for cheese making.

Roach Et Al. (Disruption and sedimentation of casein micelles and case isolates under high-pressure homogenization, Innovative Food Science and Emerging Technologies, vol. 9, no. 1, 26 November 2007, pages 1-8, XP022361823) discloses the preparation of MF retentate followed by acidification to reach a pH value of 6.7 and further discloses the application of high-pressure homogenization at a pressure in the range of 100 MPa to 350 MPa.

Summary of the invention

The present invention relates to a modified casein concentrate having an increased water binding capacity, such as of at least 1.5 g $H_2O$/g casein. This increased water binding capacity of casein allows for a cheese product with a high binding capacity.

The invention relates to a casein concentrate wherein the milk protein comprises not more than 10% serum protein, and wherein the casein micelles have an average size of less than 150 nm in diameter; and wherein the concentrate has a pH below 6.7 and a concentration of calcium of at least 5 mg/mL in the serum phase.

To obtain the casein concentrate product, milk is treated to a process. An intermediate product to the concentrate in this process is a casein composition comprising an agent capable of modifying the chemical equilibrium between the calcium bound in the casein micelles and present in the serum phase. In such an aspect, the invention relates to a casein composition comprising milk protein and not more than 10% serum protein, wherein the casein micelles have an average size of less than 150 nm in diameter; and wherein the composition comprises an agent capable of modifying the chemical equilibrium between the calcium bound in the casein micelles and present in the serum phase.

The invention is directed to a casein concentrate prepared by a method comprising the steps of

- (i) treating milk by microfiltration to produce a microfiltration retentate comprising casein micelles and a reduced amount of serum proteins compared to the starting milk
- (ii) adding an acid shifting the equilibrium between the calcium bound in the casein micelles and present in the serum phase and lowering the pH of the casein retentate to be in the range of 4.5 and 6.0
- (iii) treating the acidified casein retentate of (ii) in a dynamic high shear process at a pressure of at least 300 MPa.

The invention further relates to a process of preparing a casein concentrate comprising said steps.

The present invention also relates to a process of preparing a cheese product comprising the steps of

- (i) treating milk by microfiltration to produce a microfiltration retentate comprising casein micelles and a reduced amount of serum proteins compared to the starting milk
- (ii) adding an acid shifting the equilibrium between the calcium bound in the casein micelles and present in the serum phase and lowering the pH of the casein retentate to be in the range of 4.5 and 6.0
- (iii) treating the acidified casein retentate of (ii) in a dynamic high shear process at a pressure of at least 300 MPa
- optionally mixing the product with natural milk
- carrying out a cheese process.

Brief description of the drawings

The invention is further illustrated by the drawings, wherein

Figure 1 shows apparent viscosity (Pa s) as function of shear rate (1 $s^{-1}$) for samples with 4% casein. MCI samples at pH 6.6 are marked with a triangle, samples without homogenisation (△) and samples with homogenisation (▲). MCI samples at pH 5.8 are marked with a square, samples without homogenisation (□) and samples with homogenisation (■) (data from experiment A is presented).

Figure. 2 shows apparent viscosity (Pa s) as function of shear rate (1 $s^{-1}$) for samples with 8% casein. MCI samples at pH 6.6 are marked with a triangle, samples without homogenisation (△) and samples with homogenisation (▲). MCI samples at pH 5.8 are marked with a square, samples without homogenisation (□) and samples with homogenisation (■) (data from experiment A is presented).

Figure 3 shows measured diffusion coefficient ($m^2$ $s^{-1}$) of water molecules for samples with 4% casein. MCI samples that have been homogenised are marked with black bars, while samples without homogenisation are marked with white bars (data from experiment A is presented).

Figure 4 shows measured diffusion coefficient ($m^2$ $s^{-1}$) for water molecules samples with 8% casein. MCI samples that have been homogenised are marked with black bars, while samples without homogenisation are marked with white bars (data from experiment A is presented).

Figure 5 shows the z-average hydrodynamic diameter (nm) of the casein micelles for samples with 4% casein from two independent experiments (coloured respectively white and black).

Figure 6 shows the z-average hydrodynamic diameter (nm) of the casein micelles for samples with 8% casein from two independent experiments (coloured respectively white and black).

Figure 7 shows SAXS scattering data of the MCI with 8% casein. MCI samples at pH 6.6 are marked in gray and samples at pH 5.8 in black. Samples with homogenisation are marked with solid lines and samples without homogenisation are marked with dotted lines (data from experiment B is presented).

Figure 8 shows SAXS scattering data of the MCI with 8% casein. MCI samples at pH 6.6 are marked in gray and samples at pH 5.8 in black. Samples with homogenisation are marked with solid lines and samples without homogenisation are marked with dotted lines (data from experiment B is presented).

Figure 9 illustrates the serum phase which can be separated after ultracentrifugation from samples with 4 % casein as an indication of water binding capacity.

Figure 10 illustrates the serum phase which can be separated after ultracentrifugation from samples with 8 % casein as an indication of water binding capacity.

Detailed description of the invention

In the following detailed description of the invention, reference is made to the examples, including tables and figures.

The present invention concerns modified casein concentrates suitable for making cheese and other milk products in an alternative way to traditional processes. The manner in which changes in acidification and ultra high-pressure homogenisation affect the structure and properties of MF concentrate are described. The pH value and ultra high-pressure homogenisation are central to the process of the invention for the manufacture of MF cheese.

The present invention further addresses the ability of calcium to make structure and to gain water binding in milk products and cheese. The present invention still further pertains to alterations in the process in cheese production, such as the control of the calcium level in the starting milk and in the final product and the resulting affect in the microstructure.

Accordingly, the technical object of the invention is to provide a novel modified casein concentrate suitable for making cheese or other dairy products, showing improved water binding in the casein concentrate and in the final product and having the same or improved functional properties as known cheese. Another object is to provide cheese or other dairy products by a process which is alternative to the traditional cheese making processes.

Surprisingly, by combining the steps of 1) reduction of the amount of serum proteins, 2) modification of the chemical equilibrium between the calcium bound in the casein micelles and present in the serum phase, and 3) dynamically treating by high shear, casein micelles are obtained which are unlike from the micelles in the untreated milk. The micelles obtained are "size-reduced casein micelles" which is intended to mean that they are smaller than conventional micelles, having an average size of less than 150 nm in diameter whereas conventional casein micelles typically range in size from 250 nm to 500 nm.

The calcium ion content, which together with hydrophobic interactions hold together the casein micelles, is modified in the process of the invention (step 2), thereby leaving modified micelles labile for the high-shear treatment, and the high-shear treatment further disintegrates the micelles leading to size-reduced casein micelles. The resulting casein micelles have enhanced water binding capacity, with a larger total surface area of casein protein. It is a non-binding hypothesis that the resulting micelles are more easily accessible to enzymes, which may lead to accelerated ripening of the cheese.

Water binding and thus water content in the final modified casein concentrate and in the cheese or dairy product made from the concentrate or composition of the invention are essential determinants in the quality of the product and for the further processing of the concentrate to e.g. a cheese. The casein concentrate of the invention and the products obtained by the process of the invention surprisingly have higher water binding capacity than the casein in traditionally made cheese and the cheese itself. As shown, the casein composition of the invention when processed into cheese may show a water binding which may be up to 30 % higher than the water binding in standard cheese.

The term "milk" is intended to mean fresh animal milk, e.g. bovine or goat milk, which optionally has been pasteurised or dried milk which has been rehydrated.

The term "dynamic high shear process" is intended to mean pushing the product under high pressure through a narrow channel or chamber, thereby accelerating it to a very high velocity.

The casein composition of the invention relates to the intermediate product in the process of the invention comprising an agent capable of modifying the chemical equilibrium between the calcium bound in the casein micelles and present in the serum phase. Once the equilibrium has shifted from the micelles into the serum phase, the product is referred to as a casein concentrate.

The casein composition may be from any form or type of milk, including a skimmed milk, semi-skimmed milk, milk with natural fat content or full cream milk.

In one embodiment of the invention, a casein concentrate is prepared by a method comprising the steps of

- (i) treating milk by microfiltration to produce a microfiltration retentate comprising casein micelles and a reduced amount of serum proteins compared to the starting milk
- (ii) adding an acid shifting the equilibrium between the calcium bound in the casein micelles and present in the serum phase and lowering the pH of the casein retentate to be in the range of 4.5 and 6.0
- (iii) treating the acidified casein retentate of (ii) in a dynamic high shear process at a pressure of at least 300 MPa.

A casein composition of the invention typically comprises not more than 10 % serum protein and has a water binding capacity of at least 1.5 g $H_2O$/g casein.

A casein composition of the invention typically comprises casein micelles having an average size of less than 150 nm in diameter.

The method may further comprise steps of ultrafiltration of the permeate from said microfiltration and diafiltration of said microfiltration retentate with the ultrafiltration permeate.

In one example the casein composition comprises milk protein and not more than 10% serum protein, wherein the casein micelles have an average size of less than 150 nm in diameter; and wherein the composition comprises an agent capable of modifying the chemical equilibrium between the calcium bound in the casein micelles and present in the serum phase.

The casein composition or concentrate may comprise from 0.5% to 50% milk protein. Typically, the milk protein content in the composition is about 1% to 30%, such as 2% to 25%, such as 3% to 20%. In one embodiment of the invention, the casein composition may be a concentrate comprising from 4 to 8% casein.

In a combination of preferred features, the casein composition or the casein concentrate preferably comprises from 3 to 20 % milk protein and not more than 5 % serum protein.

In a suitable embodiment, the casein concentrate comprises casein protein, not more than 10% of the milk protein is serum protein, the casein micelles have an average size of less than 175 nm in diameter; and the casein concentrate has a pH value below 6.7, such as below 6.5, typically below 6.2. The casein concentrate suitable comprises at least 3% casein, such as at least 4%, typically about 3 to 25% casein.

As stated, the improved water binding is achieved by providing a casein concentrate which has 1) a reduction of the amount of serum proteins, and 2) modification of the chemical equilibrium between the calcium bound in the casein micelles and present in the serum phase so as to obtain "size-reduced casein micelles". The above studies indicate that pH has a role in the chemical equilibrium between the calcium bound in the casein micelles and present in the serum phase. As stated, the composition of the invention comprises an agent capable of modifying the chemical equilibrium between the calcium bound in the casein micelles and present in the serum phase. Typically the agent is selected from the group comprising an acid, an anion-exchanger and a natural chelating agent.

As shown in the enclosed studies, an acid is a highly suitable agent capable of modifying the chemical equilibrium between the calcium bound in the casein micelles and present in the serum phase. The acid may be selected from the group consisting of an organic or inorganic acid and an acid produced by microorganisms. An organic acid may be mono, di- and triacids. The agent may be an acid selected from lactic acid and citric acid, preferably citric acid.

Alternatively, the agent capable of modifying the chemical equilibrium between the calcium bound in the casein micelles and present in the serum phase may be an anion-exchanger or a natural chelating agent, such as a calcium-chelating agent. Accordingly, the agent may be selected from hexametaphosphate, oxalate, citrate, orthophosphate and chlorophyll.

The milk protein of the casein concentrate may comprise not more than 10% serum protein, and has casein micelles with an average size of less than 150 nm in diameter. The concentrate has a pH below 6. The concentration of calcium in the serum phase is at least 0.45 mg/mL.

The casein composition and concentrate may have casein micelles unlike conventional micelles. A casein composition and concentrate of the invention have micelles with an average size of less than 120 nm, such as less than 100 nm in diameter. The size of the micelles is measured by means of Dynamic light scattering (DLS).

Calculated otherwise, in a preferred embodiment, at least 90% of the micelles are less than 250 nm in diameter, such as less than 200 nm, such as less than 175 nm or less than about 150 nm. More preferably, at least 95% of the micelles are less than 200 nm in diameter, such as 95% of the micelles having a diameter of less than 175 nm or less than about 150 nm.

In a combination of preferred embodiments, the casein composition or concentrate comprises from 3 to 20 % milk protein wherein at least 90% of the micelles are less than 250 nm in diameter and the composition comprises not more than 5 % serum protein.

Typically, in the casein concentrate, the milk protein comprises not more than 10% serum protein; the casein micelles have an average size of less than 200 nm, such as less than 150 nm in diameter; and the pH is from 5.0 to 6.6. An important aspect of the invention relates to the casein concentrate. The content of serum calcium in the casein concentrate is typically significantly higher than in the untreated milk, such as at least 50 % higher, and it may be at least 100 % higher or at least 200 % higher than in untreated skimmed milk. As can be seen it Table 3, acidification led to a casein concentrate with a high calcium content in the serum phase.

As stated, acid can be used to shift the equilibrium between the calcium bound in the casein micelles towards the serum phase. The pH is thus lowered. Accordingly, the concentrate has a pH below 7 and a concentration of calcium of at least 5 mg/mL in the serum phase.

The pH is from 4.5 to 6.7, such as from 5.0 to 6.6, such as from 5.0 to 6.5, such as from 5.5 to 6.5, such as 5.5 to 6.0, such as 5.5, 5.6, 5.7, 5.8, 5.9, and 6.0.

As stated, the acid shifts the calcium equilibrium towards the serum phase, thereby increasing the calcium content in the serum phase compared to untreated milk. The casein concentrate has concentration of calcium of at least 0.45 mg/mL in the serum phase, such as at least 0.5mg/mL in the serum phase, such as at least 0.55 mg/mL, typically at least 0.6 mg/mL.. The concentration of calcium in the serum phase can be from 0.45 to 1.5 mg/mL, preferably from 0.55 to 1.5 mg/mL, such as from 0.55 to 1.2 mg/mL, such as between 0.6 and 1.2 mg/mL in the serum phase.

The casein content is typically between 4.5 mg/mL and 15 mg/mL, such as between 5.0 and 15 mg/mL, such as between 5.5 and 12 mg/mL, in the serum phase, typically between 6 and 12 mg/mL.

In a combination of preferred embodiments of the casein concentrate, the milk protein comprises not more than 10% serum protein, the casein micelles have an average size of less than 150 nm in diameter, the pH is between 4.5 and 6.7, and the calcium content in the serum phase is 5.0 and 15 mg/mL.

The water binding capacity is typically at least 1.5 g $H_2O$/g casein in the casein concentrate of the invention such as at least 1.8 g $H_2O$/g casein, at least 2.0 g $H_2O$/g casein or at least 2.2 g $H_2O$/g casein.

The water binding capacity may be measured in terms of e.g. diffusion coefficient of water, where a reduced diffusion coefficient reflects a larger binding of water or in terms of separated serum in a sample after ultracentrifugation, where less separated serum reflects a larger binding of water.

Further aspects relate to a dairy product comprising the casein composition of the invention and to a cheese comprising the composition of the invention. The cheese may be of any type and may be a cream cheese, yellow cheese, white cheese, mould cheese, low fat cheese and pasta filata type cheese.

A still further aspect may relate to a process of preparing a casein concentrate comprising the steps of

a. reducing the amount of serum proteins in an isolate compared to the starting milk; and
b. modifying the modifying the chemical equilibrium between the calcium bound in the casein micelles and present in the serum phase by treating with a suitable agent.

As stated these steps allow for a concentrate having casein micelles with a reduced size and for a concentrate with increased water binding capacity. However, further improvements can be obtained by a process further comprising step c., namely treating the resulting product in a dynamic high shear process at a pressure of at least 100 MPa.

The casein concentrate is preferably prepared wherein the acidified concentrate is subjected to a dynamic high shear process performed at a pressure of at least 200 MPa, or at least 240 MPa, preferably at least 250 MPa, such as at least 275 MPa, such as at least 300 MPa, more preferably at a pressure of 300 to 400 MPa.

Fractionated microfiltrated milk concentrate was investigated with the aim of achieving a better understanding of how changes in process parameters, such as acidification and ultra high-pressure homogenisation affect structure and properties. A new casein micelle model for small angle X-ray scattering (SAXS) was used to describe the SAXS data. The parameters obtained for samples with high pH group together independently of pressure treatment, whereas samples with low pH are clearly separated depending on the pressure treatment. The samples with low pH and ultra high-pressure treatment had a larger number average radius (<R>), a larger width of the size distribution ($\sigma\Box$R), larger volume fraction ($\eta$) and larger scaling factor between interaction radius and actual radius (s) of the micelles, see table 4, in example 1.

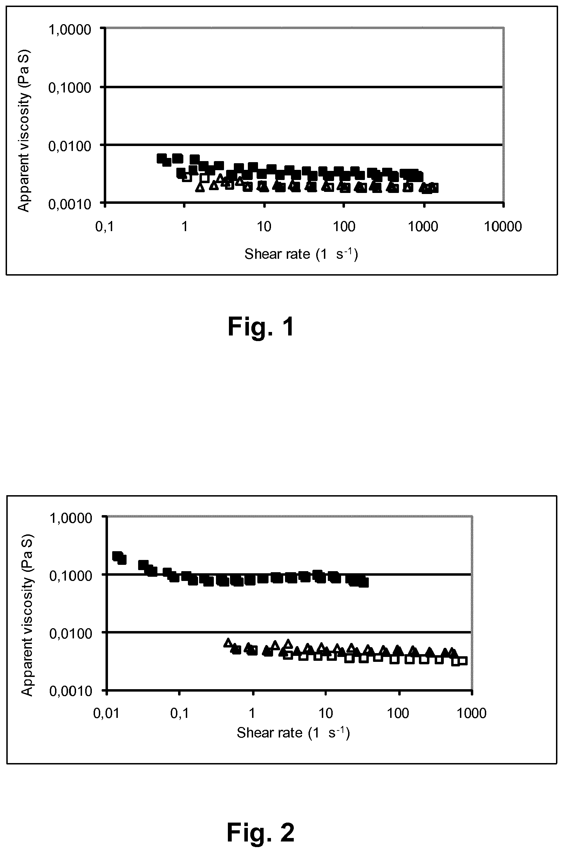

The apparent viscosities (see figure 1 and 2) were higher for the acidified high-pressure homogenised samples compared to other samples. At higher dry matter content, a more pronounced effect of acidification and pressure homogenisation was observed.

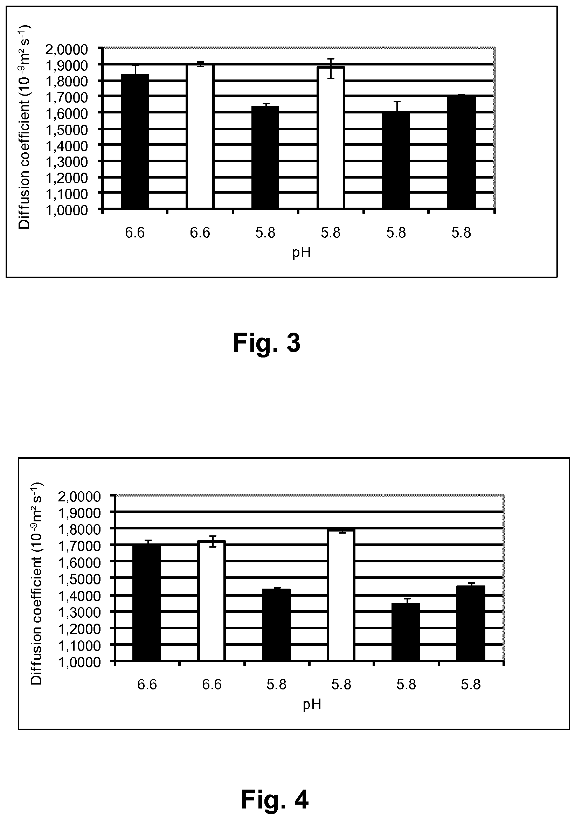

At pH 5.8, the diffusion coefficient of water was faster for samples, which had not been high-pressure homogenised compared to samples, which had been high-pressure homogenised. At pH 6.7, however, no significant effect of high-pressure homogenisation was observed. Furthermore an effect of pH was observed with faster diffusion coefficients measured at pH 6.6 compared to pH 5.8, see figure 3 and 4.

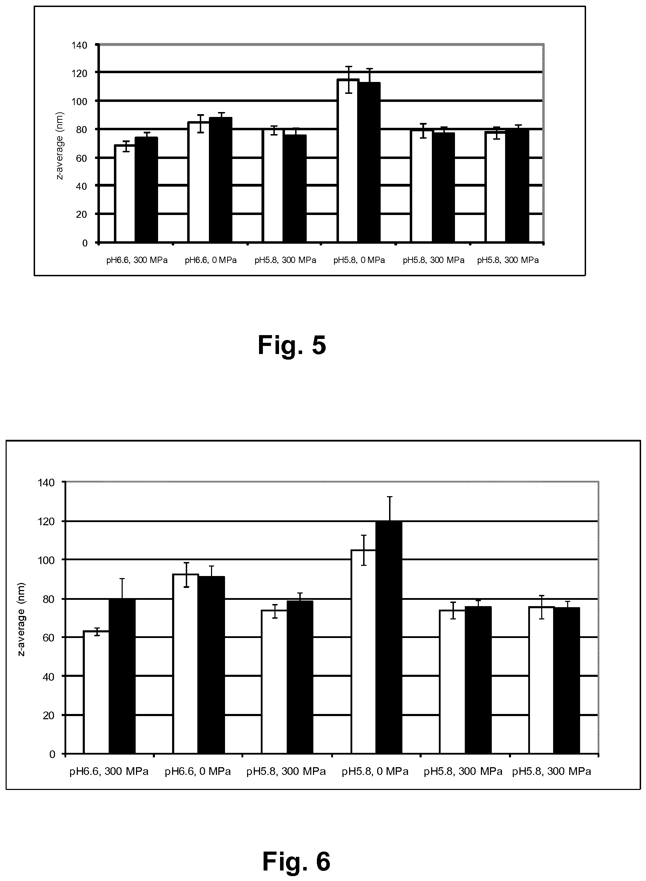

Figure 5 and 6 shows the data from DLS. The largest different in z-average hydrodynamic diameter was observed for samples with 4% and 8% casein acidified to pH 5.8 with and without high-pressure homogenisation. The effect of high-pressure homogenisation is less pronounced at pH 6.6, samples with 4% casein showed a significantly smaller hydrodynamic diameter when the samples were high-pressure homogenised than without high-pressure homogenisation.

The process may typically comprises the steps of

- treating milk by microfiltration to produce a microfiltration retentate comprising casein micelles and a reduced amount of serum proteins compared to the starting milk; and
- adding an acid to modify the pH to 5.0 to 6.5,
- treating the resulting product in a dynamic high shear process at a pressure of at least 100 MPa, such as at least 200 MPa.

Otherwise stated, this aspect relates to a process of preparing a casein composition having a water binding capacity of at least 1.5 g $H_2O$/g casein, the composition comprising and not more than 10 % serum protein, by a process comprising the steps of

- treating milk by microfiltration to produce a microfiltration retentate comprising casein micelles and a reduced amount of serum proteins compared to the starting milk
- adding an agent capable of modifying the chemical equilibrium between the calcium bound in the casein micelles and present in the serum phase
- treating the resulting product in a dynamic high shear process at a pressure of at least 100 MPa, such as at least 200 MPa.

The same steps apply to a process of preparing a casein composition comprising milk protein and not more than 10% serum protein, wherein the casein micelles have an average size of less than 150 nm in diameter; and wherein the composition comprises an agent capable of modifying the chemical equilibrium between the calcium bound in the casein micelles and present in the serum phase.

The processes of the invention typically further comprise the steps of ultrafiltration of the permeate from said microfiltration and diafiltration of said microfiltration retentate with the ultrafiltration permeate.

The cheese comprising the casein concentrate of the invention or the casein concentrate obtainable by the process of the invention may e.g. be a cheese of the type of cream cheese, yellow cheese, white cheese, mould cheese, low fat cheese and pasta filata type cheese. The dairy product of the invention may be e.g. a functional food ingredient, casein powder or a fermented milk product.

Further disclosed is a process for preparing a modified casein concentrate wherein the milk protein comprises not more than 10% serum protein, and wherein the casein micelles have an average size of less than 150 nm in diameter; and wherein the concentrate has a pH below 6.7 and a concentration of calcium of at least 0.45 mg/mL in the serum phase by a treating milk by microfiltration to produce a microfiltration retentate comprising casein micelles and a reduced amount of serum proteins compared to the starting milk

- adding an agent capable of modifying the chemical equilibrium between the calcium bound in the casein micelles and present in the serum phase
- treating the resulting product in a dynamic high shear process at a pressure of at least 100 MPa, such as at least 200 MPa.

High-pressure treatment was shown to affect casein micelles at pH 5.8., but not at pH 6.6. This indicates that some dissociation of colloidal calcium phosphate is necessary in order to make casein micelles prone to dissociation caused by high pressure. On the macroscopic level, the induced changes in the casein micelles following a decrease in pH and high-presssure treatment, led to a significantly increased viscosity. Thus diligent control of the pH combined with high-pressure homogenisation of MF concentrates provides possibilities for design of novel cheeses based on controlling the microstructure of the casein micelles.

Further disclosed is as process of preparing a casein concentrate comprising the steps of

- treating milk by microfiltration to produce a microfiltration retentate comprising casein micelles and a reduced amount of serum proteins compared to the starting milk

- adding an agent capable of modifying the pH value of the retentate (optionally upon dilution) to a value of 5.0 to 6.6,
- treating the resulting product in a dynamic high shear process at a pressure of at least 100 MPa, such as at least 200 MPa, such as at least 240 MPa, such as at least at least 250 MPa, such as 300 MPa.

In another embodiment the invention further relates to a process of preparing a dairy product in powder form comprising the steps of aforementioned steps and further comprising

- optionally mixing with natural milk
- carrying out a powder forming process such as a spray drying or a freeze drying.

Normally the microfiltration step is performed with membranes having a molecular cut-off value of at least 100 kDa, viz. molecules with a molecule weight of more than 100kDa or size of more than 30 nm is retained in the retentate by the membrane. In a preferred embodiment the membranes having a molecular cut-off value of at least 800 kDa,

The dynamic high shear process at a pressure of at least 100 MPa is performed by pushing the product as a jet under high pressure through a narrow channel/chamber. This pressure accelerates the product to a very high velocity, thereby creating controlled shearing of the casein and mixing and blending of the product to a product with size-reduced casein micelles and a more uniform distribution. In one embodiment of the invention the pressure is at least 200 MPa. In a suitable embodiment the pressure is at least 300 MPa, such as from 300 to 400 MPa. Typically, the high shear process is performed at a pressure of 100-400 MPa, such as from 200-350 MPa.

In this treatment milk is led to a first membrane filtration unit, comprising microfiltration (MF) membranes, which retains casein micelles and milk fat, whereas the permeate contains smaller molecules such as serum proteins, non-protein-nitrogen components (NPN), lactose, soluble minerals and water that pass through the microfilter. The serum proteins may be concentrated in a second membrane filtration unit comprising ultrafiltration (UF) membranes. The permeate from the UF membranes consisting of lactose, NPN and soluble minerals may be used in a diafiltration (DF) process. In DF the UF permeate is returned to the MF plant, where it is mixed with the MF retentate in the various stages to enhance the depletion of serum proteins.

The UF retentate contains the serum proteins, which are retained by the UF membrane. The UF step as part of the DF is normally performed with membranes having a cut-off value of between 1 and 20 kDa. In a preferred embodiment the membrane has a cut-off value of 5 kDa. The DF step may also involve the addition of water, RO (reverse osmosis) permeate or NF (nanofiltration) permeate. The main purpose of the diafiltration step is to produce a product of casein isolate comprising a minimal amount of serum proteins.

In the processes for preparing a casein concentrate or a cheese product, respectively, calcium may be added.

In the process of preparing a cheese product it may be convenient after the dynamically high-shear treatment to add natural milk in order to raise pH. The pH value may also be raised to the level of natural milk, viz. about 6.7, to facilitate the traditional cheese process.

The cheese process used in the process for preparing a cheese product may be any traditionally used.

Further disclosed is a modified casein concentrate obtainable by the process of the invention and to a cheese obtainable by the process of the invention.

Accordingly, in yet another aspect of the invention it relates to the use of the process of the invention for preparing such cheese and dairy products. The cheese can be of any type such as: cream cheese, yellow cheese, white cheese, mould cheese, low fat cheese and pasta filata type cheese. The dairy product can be a functional food ingredient, a dairy beverage, yoghurt, a casein powder or a fermented milk product.

All the above-mentioned embodiments may be combined in other ways so that each embodiment described for the products, processes and uses, respectively, may be combined with another embodiment, and those described for the products also can be applied for the processes and uses and vice versa.

In general the process of the invention is carried out in the following way. Pasteurised milk or skimmed milk is treated by microfiltration in a MF (microfiltration) unit equipped with suitable membranes. The resulting retentate is concentrated batch wise to the desired level of casein. Optionally, diafiltration is performed by leading the MF permeate to a UF (ultrafiltration) unit equipped with suitable membranes. The resulting UF retentate is discarded, and the UF permeate is mixed with the retentate of the MF plant. The final retentate of the MF plant is depleted of serum protein, and this product is designated Micellar Casein Isolate (MCI), Micellar Casein Concentrate (MCC) or simply Milk Concentrate. The product is either acidified as prescribed or a chelating agent is added or an ion-exchanger is used. The product is also treated by a dynamic high shear process.

The process typically comprises an optional low-pasteurization (60-80°C, 15 s) of the milk, such as skimmed milk, and followed by heating to 50°C. The MF process is carried out (500 L h$^{-1}$) with a nominal molecular weight cut-off of approximately 800 kDa. Suitably, a plurality of diafiltrations, microfiltrations and, optionally, an ultrafiltration (UF) unit are performed. The skimmed milk may be concentrated batch wise to, for instance, 4% and 8% casein. Diafiltration may be carried out using water or UF permeate. The casein isolate are then acidified to a pH value of 6.6 to 5.5. The acidification is suitably done with 20% (w/w) citric acid homogenised in a dynamic high shear process at 200-350 MPa.

The data showed that the ratio cheese per gram casein was higher for the cheese made from pre-acidified dynamic, high-shear treated MF milk compared to MF milk only pre-acidified before curd preparation. The 35% higher yield can be ascribed to increased water binding in the curd based on milk, which has been dynamic high-shear treated at 300 MPa before curd preparation

It has been observed that milk concentrate (MCI milk) can bind more water, provided that the milk is pre-treated according to the invention, e.g. with a combination of acidification with citric acid to pH 5.8 succeeded by dynamic ultra high-pressure homogenization. The aim was to examine if this improved water binding can be transferred to cheese systems.

The MCI milk added cream can be pre-heated and the starter culture was added, after a pre-maturing time the rennet is added to obtain coagulation.

The casein concentrate may be further processed into curd as follows: The product is heated to e.g. 30-50°C, and if necessary pH is adjusted. The concentrate is drained to produce a curd.

As seen from table 7 (example 4), the dry matter content of the trial cheeses was much lower than in the reference cheeses, which supports that the water content of the trial cheeses were higher than the reference cheeses.

In table 8 it is shown that cheeses based on milk which has been dynamic high shear treated obtain 30% more yield than cheeses based on MCI milk without dynamic high shear treatment. Accordingly, the invention may relate to a process for the preparation of cheese with enhanced water binding capacity.

The enhanced water binding may provide some clear advantages in cheese-making:

- Cost-saving: a higher yield of cheese curd is obtained from a given starting amount of milk.
- The consumer experiences less release of moisture from the product, also known as syneresis in e.g. a cream cheese.
- A better functionality, such as creaminess in e.g. a cream cheese of low fat.
- In some situations, it makes it possible to avoid additives or to reduce the necessity.
- New maturation possibilities and perspectives due to the better access of the maturation enzymes.

The following non-limiting examples illustrate the invention.

**Examples**

**Example 1: Milk concentrate**

_Purpose_

The aim of the experiments was to achieve an understanding of how changes in process parameters, such as acidification and dynamic high-shear treatment with pressure, affect structure and properties of micro filtrated (MF) milk concentrate based on respectively 4% and 8% casein MF milk.

_Material & Methods_

Preparation of samples of MF skimmed milk:

Low-pasteurized (73°C, 15 s) skimmed milk from Arla Foods was heated to 50°C. The MF process was carried out using a microfiltration unit (500 L h$^{-1}$) (Arla Foods, Videbæk, Denmark) equipped with 24 FR3B-6338 membranes (Synder, Vacaville, USA) with a nominal molecular weight cut-off of 800 kDa and an ultrafiltration (UF) unit (Arla Foods, Videbæk, Denmark) equipped with 16 HFK328-6338 membranes (Koch, Wilmington, USA) with a nominal molecular weight cut-off of 5 kDa. The skimmed milk was concentrated batch wise to 4% and 8% casein, respectively, and diafiltration was carried out using three volumes of UF permeate. The composition (dry matter, protein, casein and fat) of the MF concentrate was measured during the production with a Milkoscan™ (Foss electric, Hillerød, Denmark). The two MF fractions were re-pasteurized (75°C, 15 s) and cooled to 8°C using a tubular heat exchanger (APV, Silkeborg, Denmark). From each fraction, 4% and 8% casein, respectively, 6 samples were prepared for different treatment in a design of experiments (see table 1) that was created using Modde 70 (Umetrics, Umeå, Sweden).Four samples of 4% and 8 % casein isolate, respectively, were acidified to pH 5.8, and two samples were not acidified, viz. pH was 6.7. The acidification was done with 20% (w/w) citric acid (Jungbunzlauer, Basel, Schweiz) and three of the 4 acidified samples were homogenised in a dynamic high shear process at 300 MPa (SFP FPG11300, Stansted, England). One sample at pH 6.7 was homogenised (300 MPa) and one was not. The MF concentrate was poured into plastic beakers of 1 L, cooled and stored at 5°C prior to analysis. All samples were analysed after 2-5 days of storage. The experimental design is summarized in table 1.

**Table 1:**

Experimental design[a]

| Number | Casein (%) | pH | Homogenisation (MPa) |
|--------|-----------|-----|---------------------|
| P1 | 4, 8 | 6.7 | 300 |
| P2 | 4, 8 | 6.7 | 0 |
| P3 | 4, 8 | 5.8 | 300 |
| P4 | 4, 8 | 5.8 | 0 |
| P5 | 4, 8 | 5.8 | 300 |
| P6 | 4, 8 | 5.8 | 300 |
| [a] All experiments are performed in duplicate. | | | |

*Chemical analysis*

The starting skimmed milk and the treated casein isolate samples were analysed as follows: The pH was directly measured using a PHM-240 (Hach Lange, Broenshoej, Denmark). Total solid content was determined according to the IDF standard methods (International Dairy Federation 21 B, 1987). Fat was determined according to Röse-Gottlieb Gravimetric method from the IDF standard method (International Dairy Federation 1D, 1996). Nitrogen was determined using IDF standard method (International Dairy Federation 20-3, 2004). The protein content was estimated by multiplying the nitrogen content by a Kjeldahl factor of 6.38 for milk protein, while the casein content was determined by multiplying the nitrogen content with a factor 6.36 (van Boekel & Ribadeau-Dumas, 1987). The non-protein nitrogen was determined according to IDF standard method (International Dairy Federation 2002). The ash content was determined according to the NMKL standard method (Nordisk Metodikkomité for levnedsmidler, 2005). The determination of lactose was done using a lactose/D-galactose enzymatic Boehringer Mannheim test-kit (Roche, Basel, Schweiz). Total content of calcium, magnesium, sodium, chloride, potassium and phosphate were determined using inductively coupled plasma (ICP) spectroscopy (Perkin-Elmer, Massachusetts, USA). The serum calcium content was determined as follows: the samples were first centrifuged (170.000g, 4C, 1h) (Beckman Coulter Inc, Brea, USA) in order to separate fat and protein from the serum phase. Subsequently the samples were filtered through a 3 K cut-off filter to remove the remaining soluble proteins. 1 ml of supernatant was mixed with 15 ml of 0.1 M sodium acetate, and the pH of the samples was adjusted to 5.9 using sodium hydroxide. The samples were then injected in a high-pressure liquid chromatograph (HPLC) supplied with an ion change column and conductivity detector (Waters, Milford, USA).

*Rheological Measurements*

Viscometric flow curves of MF concentrate were obtained using a controlled stress rheometer (AR 2000, TA Instruments Ltd., New Castle, USA). The measuring system was double concentric cylinders (rotor outer radius 21.96 mm, rotor inner radius 20.38 mm) and a double gap cup. The viscometry measurements were done with a pre-shear step at a shear rate of 1.420 s$^{-1}$ for 5 min after which measurements were performed in the shear rate interval from 1 to 800 s$^{-1}$. 5 data points per decade in log mode were collected with a steady state of 1 min per data point. The 100 g MF concentrate was heated for 10 min at 40°C and tempered for one hour in a heating cupboard (25°C) prior to measurement of 5 ml MF concentrate. All measurements were done at 25°C and performed in duplicate.

*Low Field Nuclear Magnetic Resonance (LF-NMR)*

Relaxation measurements of the concentrate were performed on a Maran Bench top Pulsed 1 H-NMR Analyser (Oxford Instruments Ltd., Witney, UK) with a magnetic field strength of 0.47 T, corresponding to a resonance frequency of 23.2 MHz. The instrument was equipped with an 18-mm temperature variable probe. Amounts of 3 ml MF concentrate were used, and the sample was tempered for 1 hours at 25°C before measurement. Diffusion was measured using a Pulsed-Gradient Spin-Echo (PGSE) sequence. The diffusion (m$^2$/s) experiment was performed with a $\tau$ value (time between 90° and 180° pulse) of 100 $\mu$s. The data were acquired as two scan repetitions. The repetition delay between two succeeding scans was 1 s. The diffusion measurements were performed at 25°C and performed in duplicate.

*Dynamic light scattering (DLS)*

Dynamic light scattering methods were used to study the size of individual casein micelles. Dynamic light scattering requires that the concentration of scatters be sufficiently dilute for an incident photon of light to be scattered only once by the sample and that there are no hydrodynamic interaction between the particles. It is a concern whether the micelles preserve their original state and characteristics when they are diluted into buffer (Dalgleish & Hallett, 1995). The average particle size, as obtained from DLS, is expressed as the z-average hydrodynamic diameter of the casein micelles. It was measured using dynamic light scattering (MalvernNano S ZEN1600, Malvern Instruments Ltd., Worcestershire, UK). The instrument uses a laser with a wavelength of 633 nm and the intensity of scattered light is detected at an angle of 173°. A distribution analysis of the intensity autocorrelation function was used to derive an average value and distribution of diffusion coefficients, which were converted to hydrodynamic diameters using the Stokes-Einstein equation for spherical particles. Samples were diluted 50 times with a 10 mM NaCl solution (25°C) to accommodate the requirement for valid DLS measurements. The light-scattering measurements were conducted at 25°C and initiated 5 min after dilution with the NaCl solution. All measurements were performed in duplicate.

*Small-angle X-ray scattering (SAXS)*

SAXS measurements were carried out using the SAXS instrument at Department of Chemistry, Aarhus University (Pedersen, 2004). The instrument is a modified version of the NanoStar (Bruker AXS), which is a pinhole camera equipped with Göbel mirrors for monochromatizing and focusing the beam and a two-dimensional position-sensitive gas detector (HiSTAR). The scattering patterns were recorded in the range of scattering vector lengths $q$ ($q = 4\pi\sin\theta/\lambda$, where $2\theta$ is the scattering angle and $\lambda$ is the x-ray wavelength) 0.0034 - 0.211 $\text{Å}^{-1}$, using one instrument setting. The beam size at the sample position was 0.5 mm and sample-to-detector distance was 106 cm. The samples were transferred to quartz capillary tubes and measured at 25°C. All samples were measured with an acquisition time of three hours (three cycles of one hour each). No time-dependent effect was observed. The raw spectra were corrected for background from buffer, water and capillary according to standard procedure. The intensities were converted to an absolute scale and corrected for variations in detector efficiency by normalizing to the scattering of pure water (Pedersen, 2004).

*Scattering Function of Casein Micelle Model*

A variety of models of the casein micelle structure have been proposed in the literature. A new model, to analyse the experimental SAXS data, based on the casein micellar model of Hansen et al. (1996) describing the structure as spherical micelles composed of spherical sub-micelles and the more recent "dirty snowball" model of Keerl et al. (2009) has been developed. The proposed casein model is based on a set of smaller substructures collected into a larger spherical object, describing the overall casein micelle. The model is closely related to the original model of Hansen *et al.* (1996) and the more recent extended version of Keerl *et al.* (2009). The scattering function is given by

$$I(q) = N\Delta\rho^2 V^2 P_{sub}(qR_{sub})\left[n + n(n-1)P(qR)\right] \qquad (1)$$

where q is the length of the scattering vector, $N$ is the casein particle number density, V is the volume of a substructure of size $R_{sub}$, and $n$ is the number of substructures within the entire particle (casein micelle) of radius R. In the case where the scattering length density between the spheres is set to zero, the model for casein micelles described in the work of Hansen et al. (1996) is recovered with a small correction.

$P(q)$, given by

$$P(x) = \left[\frac{3(\sin x - x\cos x)}{x^3}\right]^2 \qquad (2)$$

is the form factor of a sphere. For the form factor, $P_{sub}(x)$, of the substructures, a modified polymer-like scattering function is used:

$$P_{sub}(q,\xi,\sigma) = \frac{1}{1+(q\xi)^2}\exp(-\sigma^2 q^2)$$

(3)

where $\xi$ is a correlation length, which here should be regarded as the size of the substructure domains (i.e. $R_{sub}$ in eq.1), which also identified in other studies. The exponential term with $\sigma$ makes the function decay faster at high q than the pure Lorentzian. Substructures with simple spherical form (equation 2) did not fit the experimental data and therefore the form factor in (3) was introduced.

The scattering patterns indicate some correlations between the substructures as verified by a characteristic peak at high $q$ ($q \sim 0.07\text{Å}^{-1}$). The first term in the square parenthesis of (equation 1) is related to the short-range correlations between the substructures, whereas the second term is the long-range correlations related to the fact that the substructures make up a larger particle. With a rearrangement of (Eq. 1) the equation may be rewritten into the form:

$$I(q) = Nn\Delta\rho^2 V^2 P_{sub}(qR_{sub})[1+(n-1)P(qR)] = A\,P(qR_{sub})[1+(n-1)P(qR)]$$

(4)

where A is now just a scale factor. Assuming the correlations between the particles as originating from a disordered liquid state of substructures, the system can be described by a structure factor $S(q)$. The structure factor for hard spheres is chosen, which has a simple analytical form and only depends on two parameters, the local volume fraction, $\eta_{sub}$, of substructures within the large spheres, and their interaction radius $R_{hs,sub}$, i.e. $S_{hs} = S_{hs}(q, \eta_{sub}, R_{hs,sub})$ (Kinning & Thomas, 1984; Percus & Yevick, 1958). To ensure correct normalization, the equation ends up as:

$$I(q) = A\,P_{sub}(qR_{sub})[S_{hs}(q,\eta_{sub},R_{hs,sub}) + (n - S_{hs}(q=0,\eta_{sub},R_{hs,sub}))P(qR)]$$

(5)

The large micelles need to be described as polydisperse according to the experimental data. With the relative high concentration of casein micelles, we will therefore describe the concentration effects resulting from interaction between the large particles according to a polydisperse hard-sphere structure factor. A Gaussian size distribution and the structure factor effects has been included in the local monodisperse approximation (Pedersen, 1994), which works well for large polydispersities such as that present in the casein micellar system. With this the average of the structure factor and form factor are:

$$\langle P(q)S_{hs}(q)\rangle = \frac{\displaystyle\int_{\min\{o,R-3\sigma_R\}}^{R+3\sigma_R} R^6 P(qR)S_{hs}(q,\eta,sR)G(R,\langle R\rangle,\sigma_R)dR}{\displaystyle\int_{\min\{o,R-3\sigma_R\}}^{R+3\sigma_R} R^6\, G(R,\langle R\rangle,\sigma_R)dR}$$

(6)

where s is a scale factor given by the ratio between the particle radius and the interaction radius and the Gaussian is:

$$G(R,\langle R\rangle,\sigma_R) = \frac{1}{\sqrt{2\pi\sigma_R^2}}\exp\left(-\frac{1}{2}\frac{(R-\langle R\rangle)^2}{\sigma_R^2}\right)$$

(7)

In this function $\sigma_R$ is the Gaussian width of the casein micellar size distribution and $\langle R\rangle$ is the number average radius.

The expression for fitting the data thus becomes

$$I(q) = A\,P_{sub}(q,\xi,\sigma)[S_{hs}(q,\eta_{sub},R_{hs,sub}) + (n - S_{hs}(q=0,\eta_{sub},R_{hs,sub}))\langle P(q)S_{hs}(q)\rangle]$$

(8)

with the used notation for the functions and parameters. The fit parameters are A (scaling factor), $\sigma_R$ (width of the

Gaussian size distribution), $\langle R \rangle$ (number average radius), $n$ (number of substructures within a larger particle of radius $R$), $\eta$ (volume fraction), $\_sR$ (casein micellar interaction radius), $s$ being a scaling factor between interaction radius and actual radius, $R$), $\eta_{sub}$ (volume fraction of subparticles), $R_{hs,sub}$ (interaction radius of the sub-particles), $\xi$ (correlation length), and $\sigma$ (roughness of the surface of the sub-particles).

A more explicit model would have a finite scattering contrast of the matrix between the substructures. We tried originally such a model, however, the fits showed a very large correlation between the relative contrast of matrix and substructures on one hand and the number of substructures on the other hand. Therefore we decided to set the contrast of the matrix to zero with the unfortunate consequence that the parameter, $n$, originally describing the number of substructures no longer has this simple interpretation.

**Results and discussion**

The chemical composition and pH of the skimmed milk and the treated MF samples are presented in Tables 2 and 3.

**Table 2**

Chemical composition of skim milk and MF concentrate[a]. A and B indicate separate experiments.

|  | Skim milk | A-4% casein | B-4% casein | A-8% casein | B-8% casein |
|---|---|---|---|---|---|
| Dry matter | 8.73 | 9.31[a] | 9.54[a] | 14.12[a] | 14.28[a] |
| Protein | 3.45 | 4.58 | 4.57 | 9.01[a] | 8.90[a] |
| Fat | 0.06 | 0.07[a] | 0.09[a] | 0.18 | 0.18 |
| Lactose | 4.65 | 3.60[a] | 3.82[a] | 3.31[a] | 3.54[a] |
| Ash | 0.39 | 0.87[a] | 0.79[a] | 1.25[a] | 1.22[a] |
| Calcium | 0.12000 | 0.16917[a] | 0.17000[a] | 0.31692 | 0.31608 |
| Magnesium | 0.01073 | 0.01220[a] | 0.01210[a] | 0.01797[a] | 0.01766[a] |
| Sodium | 0.03440 | 0.03129 | 0.03085 | 0.03159[a] | 0.03150[a] |
| Chloride | 0.09000 | 0.08000 | 0.08000 | 0.07200[a] | 0.08000[a] |
| Potassium | 0.14500 | 0.12900[a] | 0.13033[a] | 0.13058 | 0.13417 |

[a] Samples with the same % casein are significant different.

**Table 3**

Skim milk and MF concentrate, pH-values and serum calcium[a]

| 4% casein | P1 | P2 | P3 | P4 | P5 | P6 |
|---|---|---|---|---|---|---|
| A-pH | 6.79 | 6.78 | 6.08 | 6.07 | 6,08 | 6.08 |
| B-pH | 6.78 | 6.79 | 6.12 | 6.09 | 6,12 | 6.11 |
| Calcium[b] | 0.21±0.06 | 0.23±0.09 | 0.71±0.03 | 0.68±0.02 | 0.71±0.02 | 0.71±0.02 |
| 8% casein | P1 | P2 | P3 | P4 | P5 | P6 |
| A-pH | 6.76 | 6.77 | 6.01 | 5.95 | 6.01 | 5.99 |
| B-pH | 6.75 | 6.75 | 5.98 | 5.92 | 5.96 | 5.95 |
| Calcium[b] | 0.26±0.03 | 0.24±0.01 | 0.90±0.02 | 0.78±0.05 | 0.91±0.00 | 0.87±0.02 |

[a] Skim milk serum calcium 0.30±0.06 mg Ca mL$^{-1}$ serum phase.
[b] mg Ca mL$^{-1}$ serum phase

The chemical composition for the samples with 4% and 8% casein was significantly different for some of the components; these components are marked with an a in Table 2. The differences in chemical composition imply that data from the two trials A and B must be treated separately.

The serum calcium was higher at both casein concentrations for samples with low pH when high-pressure treatment was applied (P3, P5, P6 compared with P4). At high pH (P1, P2) similar results were observed in samples with 8% casein, whereas for samples with 4% casein no significant effect of high pressure treatment was observed. This concurs with Knudsen & Skibsted (2010) who reported higher serum calcium for milk samples pressure treated at 150 - 400 MPa.

*Rheological Measurements*

Flow curves of concentrated MF concentrate are presented as apparent viscosity against shear rate in figure 1 and 2.

The data show that the apparent viscosities were higher for the acidified high-pressure homogenised samples compared to the other samples. At higher dry matter content a more pronounced effect of acidification and high-pressure homogenisation was observed. At the two different concentrations (approx. 40 g casein $L^{-1}$ and 80 g casein $L^{-1}$) the dispersions behaved as Newtonian fluids over the range of the 0.01 - 800 $s^{-1}$ shear rate investigated. Measurements at lower shear rates than presented in figure 1 and 2, gave very noisy results (hence data not shown). Increase in protein concentration with MF (primarily casein) and the concomitant reduction in whey protein affected the physico-chemical properties of the retentate. Bouchoux et al. (2009) reported Newtonian behaviour at casein concentration below 100 g casein $L^{-1}$ and shear thinning above. This is in good agreement with our results.

Shear thinning of food materials at high shear rates is a common phenomenon. For hard-sphere fluids, Brownian motions are predominant at low shear rates, while motions are determined by hydrodynamics at high shear rates. Solanki & Rizvi (2001) reported that MF retentate started to exhibit non-Newtonian (shear-thinning) behaviour between 11 % and 17 % solid content.

*Low Field Nuclear Magnetic Resonance (LF-NMR)*

The measured diffusion coefficients of water based on the Pulsed-Gradient Spin-Echo (PGSE) sequence are mapped in figure 3 and 4.

At pH 5.8 the diffusion coefficient of water was higher for samples, which had not been high-pressure homogenised ($D_{H20(4\%)}$=1.868 $m^2$ $s^{-1}$; $D_{H20(8\%)}$=1.633 $m^2$ $s^{-1}$), as compared to samples, which had been high-pressure homogenised ($D_{H20(4\%)}$=1.632 $m^2$ $s^{-1}$; $D_{H20(8\%)}$=1.373 $m^2$ $s^{-1}$). At pH 6.6, however, no significant effect of pressure treatment was seen.

Furthermore, an effect of pH was observed with increased diffusion coefficients measured at pH 6.6 compared to pH 5.8. A possible explanation for the reduced diffusion coefficient of water in acidified samples which had been high-pressure homogenised could be an initial disintegration of the casein micelles due to the primary acidification. The disintegrated casein micelles can then be assumed to further disrupt during the high-pressure homogenisation step (DLS measurements additionally showed smaller z-average hydrodynamic diameter with high-pressure homogenisation as discussed below). $^1$H NMR studies on casein dispersions and gels (Mariette, Topgaard, Jönsson, & Soderman, 2002) have showed a decreased water diffusion coefficient with increased protein concentration, but no difference between the diffusion in a Na-caseinate (10 nm) solution and a micellar casein (150 nm) dispersion. The influence of casein concentration on the water self-diffusion coefficient may be explained by obstruction from casein molecules. Also, solvation has previously been shown to be enhanced in pressure-treated acidified skim milk between pH 5.2 and 6.1, while only pH dependent above pH 6.1 (Famelart, Gaucheron, Mariette, Le Graet, Raulot, & Boyaval, 1997).

*Dynamic light scattering (DLS)*

The data obtained from dynamic light scattering are presented in figure 5 and 6.

The largest difference in z-average hydrodynamic diameter was observed for samples acidified to pH 5.8 with and without high-pressure homogenisation. 4% and 8% samples resulted in respectively 78 nm ± 2 nm and 75 nm ± 2 nm with homogenisation versus respectively 114 nm ± 2 nm and 112 nm ± 10 nm without homogenisation. The effect of high-pressure homogenisation was less pronounced at pH 6.6, where samples with 4% casein showed a significantly decreased hydrodynamic diameter as a consequence of high-pressure homogenisation. A similar, but less evident, trend was seen for samples with 8% casein.

The z-average hydrodynamic diameter in the MF fractions with 4% and 8% casein before homogenisation were measured to range from 80 to 100 nm. Pre-treatments of the milk such as pasteurisation, microfiltration and pumping can influence the size of micelles, and the hydrodynamic diameter measured in the pasteurised skim milk before further processing was 138 nm. It may, however, be problematic to compare the casein micellar sizes as measured in dilute and in more concentrated solutions, because of the concern whether or not the casein micelle preserves its original state when diluted, as discussed above.

Knudsen (2005) observed that the casein micelles in milk pressure treated at 150 MPa and 200 MPa display the same structure as seen in untreated milk, but with slightly reduced sizes. At 300 MPa casein micelles of 50 and 500 nm was observed, while at 400 MPa the size was reduced to 30-70 nm. The average size of the casein micelle does not change significantly with removal of some of the colloidal calcium phosphate according to Lin et al. (1972) and Griffen et al. (1988), whilst Roefs et al. (1985), Horne & Davidson (1986) find that the pH-dependent change in micelle composition is reflected in a relative small decrease in micelle radius measured as average hydrodynamic diameter (from 315 nm at pH 6.7 to 290 nm at pH 5.5). Moderate and high heat treatment does not affect the size, even though these heat treatments will initiate denaturing of whey proteins, while adding of rennet and the subsequent removal of the κ-casein causes a significant decrease in the average diameter of the micelle, around 10 nm (Walstra, Bloomfield, Wei, & Jenness, 1981).

*Small angle X-ray scattering (SAXS)*

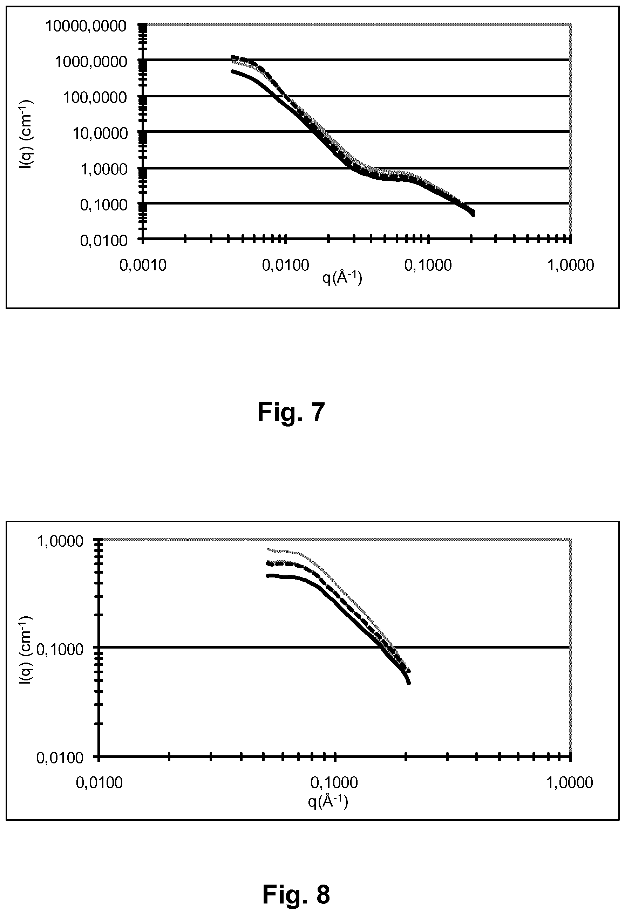

Figure 7 shows the small-angle X-ray scattering (SAXS) results, plotted as the scattered intensity as a function of scattering vector, q. Four different treatments at a casein level of 8% (and the corresponding fit to data) are presented in figure 7. Corresponding experiments for four different treatments at a casein level of 4% showed the same trends (data not presented).

The scattering curves presented in figure 7 are all characterized by two pronounced bumps: one at low $q$-values ($q \sim 5 \times 10^{-3}$ Å$^{-1}$) and one at high q-values ($q \sim 7 \times 10^{-2}$ Å$^{-1}$), as typically observed for casein systems (de Kruif & May, 1991; Hansen, Bauer, Lomholt, Quist, Pedersen, & Mortensen, 1996; Holt, de Kruif, Tuinier, & Timmins, 2003; Marchin, Putaux, Pignon, & Léonil, 2007). While the SAXS data for all samples show such qualitative similar characteristics they also exhibit clear and systematic differences as a result of the different treatments. The characteristic scattering curves with two bumps reveal a structure with two well-defined length scales, defined as particles and substructures, respectively, in accordance with the model presented above. There is a general agreement that the low-$q$ part of the scattering function, the "particles", reflects overall characteristics of the casein micelles (de Kruif & May, 1991; Hansen et al., 1996; Holt et al., 2003; Marchin et al., 2007) while it is proposed that the observed scattering pattern at high-$q$ reflects substructures of colloidal calcium phosphate (Holt et al., 2003; Marchin et al., 2007). Cryo-TEM images support this hypothesis showing that the casein micelles contain uniformly distributed darker particles with an estimated diameter of 2-3 nm (Marchin et al., 2007). In our SAXS model it is assumed that the scattering pattern at high-$q$ reflects sub-particles of colloidal calcium phosphate in the micelle.

Removal of some of the colloidal calcium phosphate from the micelle (when the samples at pH 5.8 are compared with the sample at pH 6.6) resulted in a smoother curve at higher $q$-values for the acidified samples independent of pressure treatment (figure 8, which is a zoom of figure 7) in agreement with our model. This has also been confirmed by Marchin et al. (2007). If the samples are compared at the same pH, the pressure treated samples have as well a smoother curve at high $q$-values compared to the samples, which have not been pressurised (figure 8).

To get a better understanding of the size and interaction of the particles and sub-particles the SAXS data were fitted to the casein model equation 8. The resulting parameters are summarized in Table 4.

## Table 4

## Summary of the parameters obtained by fitting the experimental I(q)[a]

| Treat-ment (pH, MPa) | Number average radius<br>$<R>$<br>(nm) | Width of the Gaussian size distribution<br>$\sigma_R$<br>(nm) | Number of sub-particles within a larger particle of radius R<br>N(number) | Volume fraction<br>$\eta$ | Scaling factor between interaction radius and actual radius, R<br>s | Volume fraction of sub-particles<br>n(sub) | Interaction radius of the sub-particles<br>$R_{hs, sub}$<br>(nm) | Size of sub-structures<br>$\xi$<br>(nm) | Roughness of the surface of the sub-structures<br>$\sigma x \, 10$<br>(nm) |
|---|---|---|---|---|---|---|---|---|---|

| 6.6, 300 | 39.90±1.11 | 12.24±0.35 | 14345 | 0.39±0.01 | 0.8662 | 0.14±0.00 | 3.70±0.05 | 1.54±0.04 | 4.31±0.07 |
|---|---|---|---|---|---|---|---|---|---|
| 6.6, 0 | 42.16±0.56 | 10.99±0.95 | 14053 | 0.36±0.03 | 0.8180 | 0.14±0.01 | 3.73±0.03 | 1.49±0.08 | 4.45±0.21 |
| 5.8, 300 | 45.93±1.46 | 19.31±0.27 | 35315 | 0.67±0.01 | 1.0219 | 0.12±0.00 | 3.54±0.02 | 1.42±0.05 | 3.86±0.04 |
| 5.8, 0 | 38.12±0.07 | 11.55±0.08 | 9974 | 0.33±0.00 | 0.9551 | 0.15±0.00 | 3.72±0.03 | 1.56±0.02 | 3.71±0.04 |
| 5.8, 300 | 46.58±0.76 | 19.42±0.43 | 38832 | 0.66±0.02 | 1.0133 | 0.12±0.00 | 3.55±0.02 | 1.39±0.05 | 3.98±0.13 |
| 5.8, 300 | 45.67±1.33 | 19.54±0.20 | 34987 | 0.68±0.01 | 1.0276 | 0.12±0.00 | 3.50±0.05 | 1.47±0.03 | 3.80±0.08 |

[a] Only data for MCI 8% samples are presented.

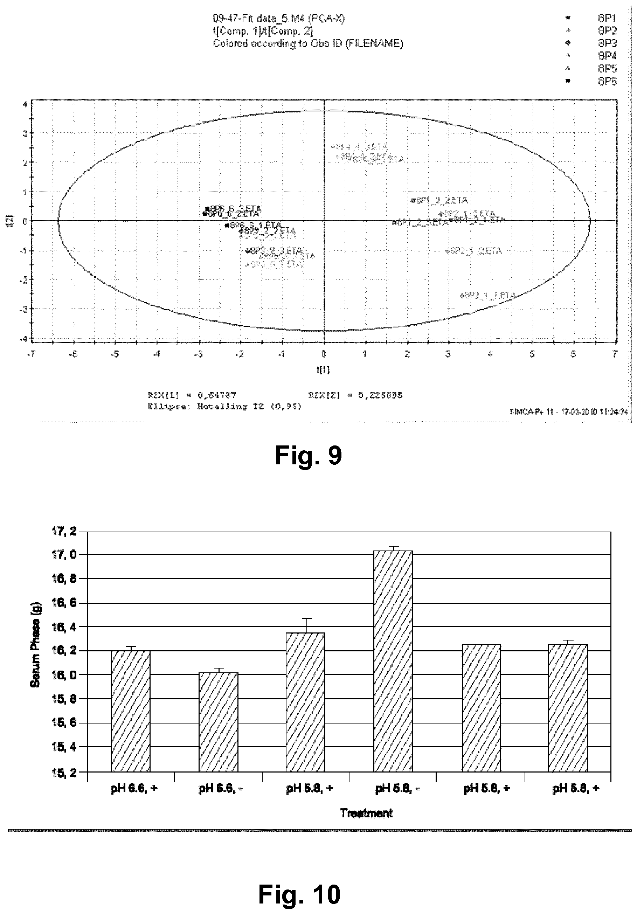

Treatment of the fitted data with multivariate data analysis shows a division of the samples into three groups, as shown in figure 9. Samples with high pH group together independently of pressure treatment, whereas samples with low pH were clearly separate depending on the applied pressure treatment. The samples with low pH and ultra high-pressure treatment had a larger number average radius ($<R>$) and a larger width of the size distribution ($\sigma_R$), larger volume fraction ($\eta$), a higher (apparent) number of sub-particles within a larger particle ($n$) and a larger interaction radius ($sR$) of the micelles.

High-pressure treatment results indicate that some dissociation of colloidal calcium phosphate (CCP) is needed to destabilize the casein micelle. Pressure treatment at low pH might lead to an increased disruption of the micelles, which then results in a more disordered re-association, hence explaining the larger width of the size distribution ($\sigma_R$). Furthermore the acidified high-pressure treated samples have a larger polydispersity ($\sigma_R$), may be due to disrupted surfaces and re-association. The re-association of the micellar fragments could also explain the observed higher value of $n$. If assumed that the sub-particles are calcium phosphate it is expected to have fewer sub-particles within a micelle when the samples are acidified, because of solubilisation of calcium phosphate. The fit of the data gives an n-value in the acidified not pressure treated samples compared to the high pH not pressure treated samples. Milk casein isolate with 4% casein show the same trends, however with an observed smaller number average radius, which could be explained by less re-association of the casein fragments because of more vigorously dynamic pressure treatment at the lower concentration.

Samples at low pH without pressure treatment were mainly distinct from the samples at high pH by having a slightly larger correlation length ($\xi$) and a lower value of roughness on the surface of the sub-particles ($\sigma$).

The model gave an average radius of 38-47 nm for milk casein isolate with 8% casein and a sub-particle radius of 1.5 nm. To validate the fitted average radius of particles a skim milk sample was measured with the same SAXS set-up to compare the obtained values with previous work (Hansen et al., 1996; Holt et al., 2003). The fit of the skim milk sample gave an average radius of 46 ± 13 nm and a sub-particle radius of 1.5 nm. The average micellar radius of about 100-120 nm and a sub-particle radius of about 7 nm with a polydispersity of about 40 - 50 % were determined with small-angle neutron scattering and static light scattering in diluted samples (Hansen et al., 1996). Holt et al. (2003) studied the substructures of bovine casein micelles in diluted solutions and observed that the substructures had a size between 4.5 - 6.7 nm depending on the used buffer for dilution. The achieved sizes of the casein micelle is in good agreements with work done by Hansen et al. (1996), while the sub-particles are estimated smaller than Hansen et al. (1996) and Holt et al. (2003).

The total surface area of protein becomes larger, and, accordingly, the binding of water to the protein surfaces will be larger, and the diffusion coefficient of water would be reduced. The hydration effect, the lowering of the water diffusion could be explained on account of water-protein interaction.

**Example 2: Serum**

*Serum phase separated from the concentrate*

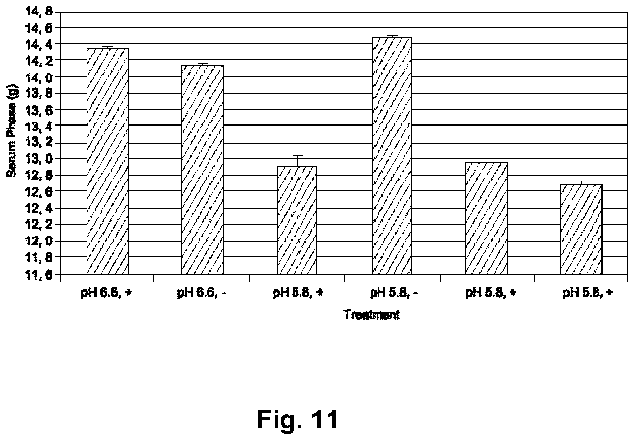

The water binding was also measured in terms of separated serum in the samples after ultracentrifugation. The serum phase amounts (g) measured are mapped in Figures 10 and 11.

The samples comprising 8% casein which had been acidified and treated at high-shear pressure, viz. samples 8% P3, P5 and P6, showed increased water binding, viz. less separated serum after ultracentrifugation. The samples comprising 4% casein showed the same results for the acidified samples treated by high-shear pressure, viz. samples 4% P3, P5 and P6.

*Serum calcium content*

The serum calcium content was measured as described under "chemical analysis" above in the samples comprising 8 % casein. The amount of calcium (mg) measured are displayed in Table 3. The samples comprising 8% casein which had been acidified and treated at dynamically high-shear pressure, viz. samples 8% P3, P5 and P6, showed increased amount of serum calcium/ ml serum.

**Example 3:** Acid cheese curd application

*Purpose*

The aim of the experiment was to achieve a better understanding of how changes in process parameters such as acidification and dynamic high-shear pressure treatment affect structure and properties of cheese curd based on MF concentrate.

*Material and Methods*

Preparation of curd: 1 kg of cold MF concentrate with 3.6% of casein (pre-treated as described in material and methods example 1) was heated to 30°C. The MF concentrate was acidified with 10% lactic acid to pH 5.21 and heated (50°C, 30 min). The concentrate was subsequently drained (30 min) in cheese cups with filter. The amount of curd was weighed (kg), and the yield was calculated. Two experiments were conducted, one with a sample, which had been treated by high-shear pressure, and one which had not.

**Results and conclusion**

The results from the two cheese experiments are presented in Table 5.

**Table 5:**

Yields from two experiments with and without dynamic high-shear pressure treatment

|  | Yield, Curd (g) | Casein in 1000g milk (g) | Cheese / casein (g) |
|---|---|---|---|
| pH 5.8; + high shear pressure treatment | 138 | 36 | 3,8 |
| pH 5.8; ÷ high shear pressure treatment | 102 | 36 | 2,8 |

*Conclusion*

The data showed that the ratio cheese per gram casein was higher for the cheese made from pre-acidified dynamic, high-shear treated MF milk compared to MF milk only pre-acidified before curd preparation. The 35% higher yield can be ascribed to increased water binding in the curd based on milk, which has been dynamic high-shear treated at 300 MPa before curd preparation.

**Example 4:** Rennet cheese curd application

It has been observed that milk concentrate (MCI milk) can bind more water, provided that the milk is pre-treated according to the invention, e.g. with a combination of acidification with citric acid to pH 5.8 succeeded by dynamic ultra high-pressure homogenization. The aim was to examine if this improved water binding can be transferred to cheese systems.

*Purpose*

The aim of this experiment was to compare cheeses based on milk, which has been dynamic high shear treated (UHPH) with cheeses produced on milk, which has not been dynamic high shear treated:

Vat 41-2-1: MCI milk acidified to pH 5.8, UHPH reverse 35.000 psi (240 MPa) Vat 41-2-2: MCI milk acidified to pH 5.8

*Method*

The methods for dynamic high shear homogenization and cheese production are outlined below.

*Homogenization of MCI milk*

MCI milk was produced like described in example 1. The MCI milk was dynamic high shear treated with reverse set up at 35.000 psi (240 MPa) on the ultra high-pressure homogenization unit (Bee International).

*Cheese production*

The MCI milk added cream was pre-heated and the starter culture was added, after a pre-maturing time the rennet is added to obtain coagulation. The coagulated curd was cut to small squares with curd cutting equipment, after cutting the squares rested a short time before stirring. The cheese grains were stirred to cupping pH. The grains were pre-pressed in the vat at three different pressures and the pre-pressed curd was cut to four cheeses and put into forms before after-pressing. The cheeses was cooled in cold water and salted in a salt solution before storage in plastic bags.

**Results and discussion**

Relevant results are presented and discussed below.

*MCI concentrate, LF-NMR*

The MCI milk is analyzed with LF-NMR to determine the diffusion coefficient and by that the water mobility. The diffusion coefficients are outlined in table 6.

**Table 6:**

Diffusion coefficient measured in MCI milk.

|  | 41-2-1 (Vat 1) $E^{-9}$ (m$^2$/sec) | 41-2-2 (Vat 2) $E^{-9}$ (m$^2$/sec) |
|---|---|---|
| Diffusion coefficient | 1.578 | 1.918 |

As seen from table 6, a reduction in the water mobility was obtained with ultra high-pressure treatment of the MCI fraction, which also has been observed in earlier trials.

*Chemical data for milk and cheese*

Below the chemical data for MCI milk, cheese milk, cheese and whey is presented.

**Table 7:**

Chemical data for MCI milk, cheese milk, cheese and whey

|  | Dry matter (%) | Protein (%) |  | Fat (%) / Fat in dry matter (%) | Salt (%) |
|---|---|---|---|---|---|
| MCI milk 41-2-1 | 9.40 | 4.23 |  | 0.08 |  |
| MCI milk 41-2-2 | 9.19 | 4.31 |  | 0.09 |  |
| Cheese milk 41-2-1 | 13.17 | 4.01 |  | 4.27 |  |
| Cheese milk 41-2-2 | 12.82 | 4.04 |  | 3.99 |  |
|  |  |  | **pH** |  |  |
| Cheese 41-2-1[1] | 44.54 | 19.39 | 4.85 | 21.2/(47.6) | 1.25 |
| Cheese 41-2-2 | 51.35 | 25.56 | 5.05 | 20.5 / (39.9) | 1.20 |
| Whey 41-2-1 | 6.20 | 0.61 |  | 0.64 |  |
| Whey 41-2-2 | 6.63 | 0.63 |  | 1.21 |  |

[1] Trial cheese

As seen from table 7, the dry matter content of the trial cheeses was much lower than in the reference cheeses, which supports that the water content of the trial cheeses were higher than in the reference cheeses.

In table 8 below the mass balance is presented. Cheeses based on milk which has been dynamic high shear treated obtain 30% more yield than cheeses based on MCI milk without dynamic high shear treatment.

**Table 8:**

Mass balance and calculated mass balance

|  | 41-2-1 (Vat 1) | 41-2-2 (Vat 2) |
| --- | --- | --- |
| Milk (kg) | 15.150 | 15.150 |
| Whey (kg) | 11.885 | 12.671 |
| Fresh cheese (kg) (after pressing) | 2.648 | 2.025 |
| Cooled cheese (kg) (after water cooling) | 2.473 | 1.894 |
| Salted cheese (kg) (after salting) | 2.425 | 1.843 |
| Produced more cheese (%) | 30% | 0% |

*Conclusion*

It has been possible to produce cheese on the basis of MCI milk with and without dynamic high shear homogenization. Improved water binding of 30% was observed in cheese produced on the basis of dynamic high shear treated MCI milk.

**References**

Anama, S.G. (2008). Effect of milk solids concentration on whey protein denaturation, particle size changes and solubilization of casein in high-pressure-treated skim milk. International Dairy Journal, 18, 228-235.

Ardisson-Korat, A. V., & Rizvi, S. H. (2004). Vatless Manufacturing of Low-Moisture Part-Skim Mozzarella Cheese from Highly Concentrated Skim Milk Microfiltration Retentates. Journal of Dairy Science, 87, 3601-3613.

Bienvenue, A., Jimenez-Flores, R., & Singh, H. (2003). Rheological Properties of Concentrated Skim Milk: Importence of Soluble Minerals in the Changes in Viscosity During Storage. Journal of Dairy Science, 86, 3813-3821.

Bouchoux, A., Debbou, B., Gésan-Guiziou, G., Famelart, M.-H., Doublier, J.-L., & Cabane, B. (2009). Rheology and phase behaviour of dense casein micelle dispersions. The Journal of Chemical Physics, 131, 165106-1-165106-11.

Brandsma, R. L., & Rizvi, S. H. H. (2001 a). Effect of Manufacturing Treatments on the Rheological Character of Mozzarella Cheese made from Microfiltration Retentate Depleted of Whey Proteins. International Journal of Food Science and Technology, 36, 601 - 610.

Brandsma R. L., & Rizvi, S. H. H. (2001 b). Manufacture of Mozzarella Cheese from Highly Concentrated Skim Milk Microfiltration Retentate Depleted of Whey Proteins. International Journal of Food Science and Technology, 36, 611-624.

Dalgleish, D. G., & Hallett, F. R. (1995). Dynamic light scattering: Applications to food systems. Food Research International, 28(3), 181-193.

de Kruif, C., & May, R. P. (1991). $\kappa$-Casein micelles: structure, interaction and gelling studied by small-angle neutron scattering. European Journal of Biochemistry, 200, 431-436.

Famelart, M. H., Gaucheron, F., Mariette, F., Le Graet, Y., Raulot, K., & Boyaval, E. (1997). Acidification of Pressure-treated Milk. International Dairy Journal, 7, 325-330.

Fox, P. F., & McSweeney, P. L. H. (1998). Water in Milk and Dairy Products. In P. F. Fox, & P. L. H. McSweeney (Eds.), Dairy Chemistry and Biochemistry (pp. 294-316). London: Blackie Academic & Professional.

Griffin, M. C., Lyster, R. L., & Price, J. C. (1988). The dis-aggregation of calcium-depleted casein micelles. European Journal of Biochemistry, 174, 339-343.

Hansen, S., Bauer, R., Lomholt, S. B., Quist, K. B., Pedersen, J. S., & Mortensen, K. (1996). Structure of casein micelles studied by small-angle neutron scattering. European Biophysics Journal, 24, 143-147.

Holt, C., de Kruif, C. G., Tuinier, R., & Timmins, P. A. (2003). Substructure of bovine casein micelles by small-angle X-ray and neutron scattering. Colloids and Surfaces A: Physicochemical and Engineering Aspects, 213, 275-284.

Horne, D. S., & Davidson, C. M. (1986). The effect of environmental conditions on the steric stabilization of casein micelles. Colloid and Polymer Science, 264, 727-734.

IDF Standard 1 D. (1996). Milk - Determination of Fat Content - Röse-Gottlieb Bravimetric Method. Int. Dairy Fed., Brussels, Belgium.

IDF Standard 20-3. (2004). Determination of Nitrogen Content. Int. Dairy Fed., Brussels, Belgium.

IDF Standard 20-4. (2002). Determination of non-Nitrogen Content. Int. Dairy Fed., Brussel, Belgium.

IDF Standard 21 B modified. (1987). Milk, cream and evaporated milk. Determination of the Total Solids Content. Int. Dairy Fed., Brussels, Belgium.

Karlsson, A. O. (2005). Controlling physical properties of rennet-induced casein gels made from concentrated skim milk. PhD Thesis, KU-LIFE, Copenhagen.

Keerl, M., Pedersen, J. S., & Richtering, W. (2009). Temperature Sensitive Copolymer Microgels with Nanophase Separated Structure. Journal of the American Chemical Society, 131(8), 3093-3097.

Kinning, D.J. & Thomas, E.L. (1984). Macromolecules 17, 1712-1718.

Knudsen, J. (2005). High Pressure effects on milk proteins. PhD Thesis, KU-LIFE, Copenhagen.

Knudsen, J., & Skibsted, L. H. (2010). High pressure effects on the structure of casein micelles in milk as studied by cryo-transmission electron microscopy. Food Chemistry, 119, 202-208.

Larsson, M. (2004). Renneted MF Retentate as a Model for Fat-Free Cheese - Texture Microstructure and Proteolysis Pattern During Storage. PhD Thesis, Lund, Sweden.

Lin, S. H. C., Leong, S. L., Dewan, R. K., Bloomfield, V. A., & Morr, C. V. (1972). Effect of Calcium Ion on the Structure of Native Bovine Casein Micelles. Biochemistry, 11, 1818-1821.

Marchin, S., Putaux, J-L., Pignon, F., & Léonil, J. (2007). Effects of the environment factors on the casein micelle structure studied by cryo transmission electron microscopy and small-angle x-ray scatter/ultrasmall-angle x-ray scattering. The Journal of Chemical Physics, 126, 045101-1 - 045101-10.

Mariette, F., Topgaard, D., Jönsson, B., & Soderman, O. (2002). 1H NMR Diffusiometry Study of Water in Casein Dispersions and Gels. Journal of Agricultural and Food Chemistry, 50, 4295-4302.

McMahon, D. J. & Oommen, B. S. (2008). Supramolecular Structure of the Casein Micelle. Journal of Dairy Science, 91, 1709-1721.

Neocleous, M., Barbano, D. M., & Rudan, M. A. (2002a). Impact of Low Concentration Factor Microfiltration on Milk Component Recovery and Cheddar Cheese Yield. Journal of Dairy Science, 85, 2415-2424.

Neocleous, M., Barbano, D. M., & Rudan, M. A. (2002b). Impact of Low Concentration Factor Microfiltration on the Composition and Aging of Cheddar Cheese. Journal of Dairy Science, 85, 2425-2437.

Nelson, B. K., & Barbano, D. M. (2005). A Microfiltration Process to Maximize Removal of Serum Proteins from Skim Milk Before Cheese Making. Journal of Dairy Science, 88, 1891-1900.

NMKL nr. 173. (2005). Ash, gravimetric determination in foods. Nordisk Metodikkommitté For Livsmedel.

Pedersen, J. S. (1994). Determination of Size Distributions from Hard-sphere Interactions. Journal of Applied Crystallography, 27, 595-608.

Pedersen, J. S. (2004). a Flux- and background-optimized version of the NanoSTAR small-angle X-ray scattering camera for solution scattering. Journal of Applied Crystallography, 37, 369-380.

Percus, J.K. & Yevick, G.J. (1958). Physical Review 110, 1-13.

Roefs, S. P. F. M., Walstra, P., Dalgleish, D. G., & Horne, D. S. (1985). Preliminary note on the change in casein micelles caused by acidification. Netherlands Milk Dairy Journal, 39, 119-122.

Solanki, G., & Rizvi, S. S. H. (2001). Physico-Chemical Properties of Skim Milk Retentates from Microfiltration. Journal of Dairy Science, 84, 2381-2391.

van Boekel, M. A. J. S., & Ribadeau-Dumas, B. (1987). Addendum to the Evaluation of the Kjeldahl Factor for Conversion of the Nitrogen-Content of Milk and Milk-Products to Protein-Content. Netherlands Milk and Dairy Journal, 41, 281-284.

Walstra, P., Bloomfield, V. A., Wei, G. J., & Jenness, R. (1981). Effect of Chymosin Action on the Hydrodynamic Diameter of Casein Micelles. Biochimica et Biophysica Acta, 669, 258-259.

## Claims

1. A casein concentrate prepared by a method comprising the steps of

   (i) treating milk by microfiltration to produce a microfiltration retentate comprising casein micelles and a reduced amount of serum proteins compared to the starting milk
   (ii) adding an acid shifting the equilibrium between the calcium bound in the casein micelles and present in the serum phase and lowering the pH of the casein retentate to be in the range of 4.5 and 6.0
   (iii) treating the acidified casein retentate of (ii) in a dynamic high shear process at a pressure of at least 300 MPa.

2.  A casein concentrate according to claim 1, the composition comprising not more than 10 % serum protein and having a water binding capacity of at least 1.5 g $H_2O$/g casein.

3.  A casein concentrate according to any one of claims 1 to 2, the concentrate comprising casein micelles having an average size of less than 150 nm in diameter.

4.  A casein concentrate according to any one of claims 1 to 3, wherein the method further comprising steps of ultrafiltration of the permeate from said microfiltration and diafiltration of said microfiltration retentate with the ultrafiltration permeate.

5.  A casein concentrate according to any one of claims 1 to 4, wherein said treating in a dynamic high shear process is performed at a pressure of 300 to 400 MPa.

6.  A casein concentrate according to any one of claims 1 to 5, wherein the acid is selected from organic di and tri acids, such as citric acid, or from acids produced by microorganisms, such as lactic acid.

7.  A casein concentrate according to claim 1, wherein at least 90% of the micelles are less than 250 nm in diameter, such as less than 200 nm, such as less than 150 nm.

8.  A process of preparing a casein concentrate comprising the steps of

    (i) treating milk by microfiltration to produce a microfiltration retentate comprising casein micelles and a reduced amount of serum proteins compared to the starting milk
    (ii) adding an acid shifting the equilibrium between the calcium bound in the casein micelles and present in the serum phase and lowering the pH of the casein retentate to be in the range of 4.5 and 6.0
    (iii) treating the acidified casein retentate of (ii) in a dynamic high shear process at a pressure of at least 300 MPa.

9.  The process according to claim 8 further comprising steps of ultrafiltration of the permeate from said microfiltration and diafiltration of said microfiltration retentate with the ultrafiltration permeate.

10. The process according to any one of claims 8 or 9 wherein the acid is selected from organic di and tri acids, such as citric acid, or from acids produced by microorganisms, such as lactic acid.

11. A process for preparing a cheese product comprising the steps of any of the claims 8 to 10 and further comprising the steps of

    • optionally mixing the product with natural milk
    • carrying out a cheese process.

12. A process of preparing a dairy product in powder form comprising the steps of any of the claims 8 to 10 and further the steps of

    • optionally mixing with natural milk
    • carrying out a powder forming process such as a spray drying or a freeze drying.

13. Use of the process of any of the claims 8 to 12 for preparing a cheese product of one of the following types: cream cheese, yellow cheese, white cheese, mould cheese, low fat cheese and pasta filata type cheese.

14. Use of the process of any of the claims 8 to 12 for preparing a dairy product, such as a functional food ingredient, a dairy beverage, a casein powder or a fermented milk product.


**Patentansprüche**

1.  Caseinkonzentrat, hergestellt durch ein Verfahren, das folgende Schritte umfasst

    (i) Behandeln von Milch durch Mikrofiltration zur Erzeugung eines Mikrofiltrationsretentats umfassend Caseinmizellen und eine im Vergleich zur Ausgansmilch reduzierte Menge an Serumproteinen

(ii) Zusetzen einer Säure, die das Gleichgewicht zwischen dem in den Caseinmizellen gebundenen und in der Serumphase gegenwärtigen Calcium ändert und den pH-Wert des Caseinretentats senkt, sodass er im Bereich von 4,5 und 6,0 liegt

(iii) Behandeln des gesäuerten Caseinretentats aus (ii) in einem dynamischen hochscherenden Verfahren bei einem Druck von mindestens 300 MPa.

2. Caseinkonzentrat nach Anspruch 1, wobei die Zusammensetzung nicht mehr als 10 % Serumprotein umfasst und eine Wasserbindungsfähigkeit von mindestens 1,5 g $H_2O$/g Casein aufweist.

3. Caseinkonzentrat nach einem der Ansprüche 1 bis 2, wobei das Konzentrat Caseinmizellen mit einer mittleren Größe von weniger als 150 nm im Durchmesser umfasst.

4. Caseinkonzentrat nach einem der Ansprüche 1 bis 3, wobei das Verfahren ferner die Schritte der Ultrafiltration des Permeats der Mikrofiltration und der Diafiltration des Mikrofiltrationsretentats mit dem Ultrafiltrationspermeat umfasst.

5. Caseinkonzentrat nach einem der Ansprüche 1 bis 4, wobei das Behandeln in einem dynamischen hochscherenden Verfahren bei einem Druck von 300 bis 400 MPa durchgeführt wird.

6. Caseinkonzentrat nach einem der Ansprüche 1 bis 5, wobei die Säure aus organischen Di- und Trisäuren, wie etwa Zitronensäure, oder aus von Mikroorganismen erzeugten Säuren, wie etwa Milchsäure, ausgewählt ist.

7. Caseinkonzentrat nach Anspruch 1, wobei mindestens 90 % der Mizellen weniger als 250 nm im Durchmesser, wie etwa weniger als 200 nm, wie etwa weniger als 150 nm, betragen.

8. Verfahren zum Herstellen eines Caseinkonzentrats, umfassend die folgenden Schritte

(i) Behandeln von Milch durch Mikrofiltration zur Erzeugung eines Mikrofiltrationsretentats umfassend Caseinmizellen und eine im Vergleich zur Ausgansmilch reduzierte Menge an Serumproteinen

(ii) Zusetzen einer Säure, die das Gleichgewicht zwischen dem in den Caseinmizellen gebundenen und in der Serumphase gegenwärtigen Calcium ändert und den pH-Wert des Caseinretentats senkt, sodass er im Bereich von 4,5 und 6,0 liegt

(iii) Behandeln des gesäuerten Caseinretentats aus (ii) in einem dynamischen hochscherenden Verfahren bei einem Druck von mindestens 300 MPa.

9. Verfahren nach Anspruch 8, ferner umfassend Schritte der Ultrafiltration des Permeats der Mikrofiltration und der Diafiltration des Mikrofiltrationsretentats mit dem Ultrafiltrationspermeat.

10. Verfahren nach einem der Ansprüche 8 oder 9, wobei die Säure aus organischen Di- und Trisäuren, wie etwa Zitronensäure, oder aus von Mikroorganismen erzeugten Säuren, wie etwa Milchsäure, ausgewählt ist.

11. Verfahren zum Herstellen eines Käseprodukts, umfassend die Schritte aus einem der Ansprüche 8 bis 10 und ferner umfassend folgende Schritte

• optionales Mischen des Produkts mit natürlicher Milch
• Durchführen eines Käse-Verfahrens.

12. Verfahren zum Herstellen eines Milchprodukts in Pulverform, umfassend die Schritte aus einem der Ansprüche 8 bis 10 und ferner folgende Schritte

• optionales Mischen mit natürlicher Milch
• Durchführen eins Pulverbildungsverfahrens, wie etwa Sprühtrocknen oder Gefriertrocknen.

13. Verwendung des Verfahrens nach einem der Ansprüche 8 bis 12 zum Herstellen eines Käseprodukts von einem der folgenden Typen: Streichkäse, gelber Käse, weißer Käse, Schimmelkäse, fettarmer Käse und Käse vom Typ Filata.

14. Verwendung des Verfahrens nach einem der Ansprüche 8 bis 12 zum Herstellen eines Milchprodukts, wie etwa einer Zutat funktioneller Lebensmittel, eines Milchgetränks, eines Caseinpulvers oder eines Sauermilchprodukts.

**Revendications**

1. Concentré de caséine préparé par un procédé comprenant les étapes consistant à

   (i) le traitement du lait par microfiltration pour produire un rétentat de microfiltration comprenant les micelles de caséine et une quantité réduite de protéines sériques par rapport au lait de départ
   (ii) l'ajout d'un acide capable de modifier l'équilibre chimique entre le calcium lié dans les micelles de caséine et présent dans la phase sérique et un abaissement de la valeur pH du rétentat de caséine à un intervalle compris entre 4,5 et 6,0
   (iii) le traitement du rétentat de caséine acidifié de l'étape (ii) dans un processus dynamique de cisaillement élevé à une pression d'au moins 300 MPa.

2. Concentré de caséine selon la revendication 1, la composition comprenant moins de 10% des protéines de sérum et ayant une capacité de liaison d'eau d'au moins 1,5 g de $H_2O$/g de caséine

3. Concentré de caséine selon l'une quelconque des revendications 1 à 2, le concentré comprenant les micelles de caséine ayant une taille moyenne inférieure à 150 nm de diamètre.

4. Concentré de caséine selon l'une quelconque des revendications 1 à 3, dans lequel le procédé comprenant en outre les étapes d'ultrafiltration du perméat à partir de ladite microfiltration et de ladite diafiltration dudit rétentat de microfiltration avec le perméat d'ultrafiltration.

5. Concentré de caséine selon l'une quelconque des revendications 1 à 4, dans lequel ledit traitement dans un processus de cisaillement dynamique élevé est réalisée à une pression comprise entre 300 et 400 MPa.

6. Concentré de caséine selon l'une quelconque des revendications 1 à 5, dans lequel l'acide est choisi parmi les di et tri des acides organiques, tels que l'acide citrique, ou des acides produits par les micro-organismes, tels que l'acide lactique.

7. Concentré de caséine selon la revendication 1, dans lequel au moins 90% des micelles sont inférieure à 250 nm de diamètre, par exemple inférieur à 200 nm, par exemple inférieure à 150 nm.

8. Concentré de caséine préparé par un procédé comprenant les étapes consistant à

   (i) le traitement du lait par microfiltration pour produire un rétentat de microfiltration comprenant les micelles de caséine et une quantité réduite de protéines sériques par rapport au lait de départ
   (ii) l'ajout d'un acide capable de modifier l'équilibre chimique entre le calcium lié dans les micelles de caséine et présent dans la phase sérique et un abaissement de la valeur pH du rétentat de caséine à un intervalle comprise entre 4,5 et 6,0
   (iii) le traitement du rétentat de caséine acidifié de l'étape (ii) dans un processus dynamique de cisaillement élevé à une pression d'au moins 300 MPa.

9. Procédé selon la revendication 8, comprenant en outre les étapes d'ultrafiltration du perméat à partir de ladite microfiltration et de ladite diafiltration dudit rétentat de microfiltration avec le perméat d'ultrafiltration.

10. Procédé selon l'une quelconque des revendications 8 ou 9, dans lequel l'acide est choisi parmi les di et tri des acides organiques, tels que l'acide citrique, ou des acides produits par les micro-organismes, tels que l'acide lactique

11. Procédé de préparation d'un produit de fromage, comprenant les étapes de l'une quelconque des revendications 8 à 10 et comprenant en outre les étapes consistant à

   • mélanger éventuellement le produit avec du lait naturel
   • mettre en oeuvre un procédé de fromage.

12. Procédé de préparation d'un produit laitier sous forme de poudre, comprenant les étapes de l'une quelconque des revendications 8 à 10 et comprenant en outre les étapes consistant à

   • mélanger éventuellement le produit avec du lait naturel

• mettre en oeuvre un procédé de formation de poudre, tel qu'un séchage par pulvérisation ou une lyophilisation.

**13.** Utilisation du procédé selon l'une des revendications 8 à 12 pour la préparation d'un produit de fromage de l'un des types suivants: fromage à la crème, fromage jaune, fromage blanc, fromage de moule, fromage faible en gras et fromage à pâte filée.

**14.** Utilisation du procédé selon l'une des revendications 8 à 12 pour la préparation d'un produit laitier, tel qu'un ingrédient fonctionnel alimentaire, une boisson à base de lait, une poudre de caséine ou un produit laitier fermenté.

Fig. 1

Fig. 2

**Fig. 3**

**Fig. 4**

**Fig. 5**

**Fig. 6**

**Fig. 7**

**Fig. 8**

Fig. 9

Fig. 10

**Fig. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030077357 A

- WO 2012110706 A

**Non-patent literature cited in the description**

- **HARTE et al.** *Innovative Food Science and Emerging Technologies,* 2008, vol. 9, 1-8
- use of cold microfiltration retentates produced with polymeric membranes for standardization of milks for manufacture of pizza cheese. **GOVINDASAMY-LU-CEY et al.** Journal of dairy science. American Dairy Science Association, vol. 90, 4552-4568
- **ROACH et al.** Disruption and sedimentation of casein micelles and case isolates under high-pressure homogenization. *Innovative Food Science and Emerging Technologies,* 26 November 2007, vol. 9 (1), 1-8
- **ANAMA, S.G.** Effect of milk solids concentration on whey protein denaturation, particle size changes and solubilization of casein in high-pressure-treated skim milk. *International Dairy Journal,* 2008, vol. 18, 228-235
- **ARDISSON-KORAT, A. V. ; RIZVI, S. H.** Vatless Manufacturing of Low-Moisture Part-Skim Mozzarella Cheese from Highly Concentrated Skim Milk Microfiltration Retentates. *Journal of Dairy Science,* 2004, vol. 87, 3601-3613
- **BIENVENUE, A. ; JIMENEZ-FLORES, R. ; SINGH, H.** Rheological Properties of Concentrated Skim Milk: Importence of Soluble Minerals in the Changes in Viscosity During Storage. *Journal of Dairy Science,* 2003, vol. 86, 3813-3821
- **BOUCHOUX, A. ; DEBBOU, B. ; GÉSAN-GUIZIOU, G. ; FAMELART, M.-H. ; DOUBLIER, J.-L. ; CABANE, B.** Rheology and phase behaviour of dense casein micelle dispersions. *The Journal of Chemical Physics,* 2009, vol. 131, 165106-1, 165106-11
- **BRANDSMA, R. L. ; RIZVI, S. H. H.** Effect of Manufacturing Treatments on the Rheological Character of Mozzarella Cheese made from Microfiltration Retentate Depleted of Whey Proteins. *International Journal of Food Science and Technology,* 2001, vol. 36, 601-610
- **BRANDSMA R. L. ; RIZVI, S. H. H.** Manufacture of Mozzarella Cheese from Highly Concentrated Skim Milk Microfiltration Retentate Depleted of Whey Proteins. *International Journal of Food Science and Technology,* 2001, vol. 36, 611-624

- **DALGLEISH, D. G. ; HALLETT, F. R.** Dynamic light scattering: Applications to food systems. *Food Research International,* 1995, vol. 28 (3), 181-193
- **DE KRUIF, C. ; MAY, R. P.** $\kappa$-Casein micelles: structure, interaction and gelling studied by small-angle neutron scattering. *European Journal of Biochemistry,* 1991, vol. 200, 431-436
- **FAMELART, M. H. ; GAUCHERON, F. ; MARIETTE, F. ; LE GRAET, Y. ; RAULOT, K. ; BOYAVAL, E.** Acidification of Pressure-treated Milk. *International Dairy Journal,* 1997, vol. 7, 325-330
- Water in Milk and Dairy Products. **FOX, P. F. ; MC-SWEENEY, P. L. H.** Dairy Chemistry and Biochemistry. Blackie Academic & Professional, 1998, 294-316
- **GRIFFIN, M. C. ; LYSTER, R. L. ; PRICE, J. C.** The dis-aggregation of calcium-depleted casein micelles. *European Journal of Biochemistry,* 1988, vol. 174, 339-343
- **HANSEN, S. ; BAUER, R. ; LOMHOLT, S. B. ; QUIST, K. B. ; PEDERSEN, J. S. ; MORTENSEN, K.** Structure of casein micelles studied by small-angle neutron scattering. *European Biophysics Journal,* 1996, vol. 24, 143-147
- **HOLT, C. ; DE KRUIF, C. G. ; TUINIER, R. ; TIMMINS, P. A.** Substructure of bovine casein micelles by small-angle X-ray and neutron scattering. *Colloids and Surfaces A: Physicochemical and Engineering Aspects,* 2003, vol. 213, 275-284
- **HORNE, D. S. ; DAVIDSON, C. M.** The effect of environmental conditions on the steric stabilization of casein micelles. *Colloid and Polymer Science,* 1986, vol. 264, 727-734
- Milk - Determination of Fat Content - Röse-Gottlieb Bravimetric Method. *Int. Dairy Fed.,* 1996
- Determination of Nitrogen Content. *Int. Dairy Fed.,* 2004
- Determination of non-Nitrogen Content. *Int. Dairy Fed.,* 2002
- Milk, cream and evaporated milk. Determination of the Total Solids Content. *Int. Dairy Fed.,* 1987

- **KARLSSON, A. O.** Controlling physical properties of rennet-induced casein gels made from concentrated skim milk. *PhD Thesis,* 2005
- **KEERL, M. ; PEDERSEN, J. S. ; RICHTERING, W.** Temperature Sensitive Copolymer Microgels with Nanophase Separated Structure. *Journal of the American Chemical Society,* 2009, vol. 131 (8), 3093-3097
- **KINNING, D.J. ; THOMAS, E.L.** *Macromolecules,* 1984, vol. 17, 1712-1718
- **KNUDSEN, J.** High Pressure effects on milk proteins. *PhD Thesis,* 2005
- **KNUDSEN, J. ; SKIBSTED, L. H.** High pressure effects on the structure of casein micelles in milk as studied by cryo-transmission electron microscopy. *Food Chemistry,* 2010, vol. 119, 202-208
- **LARSSON, M.** Renneted MF Retentate as a Model for Fat-Free Cheese - Texture Microstructure and Proteolysis Pattern During Storage. *PhD Thesis,* 2004
- **LIN, S. H. C. ; LEONG, S. L. ; DEWAN, R. K. ; BLOOMFIELD, V. A. ; MORR, C. V.** Effect of Calcium Ion on the Structure of Native Bovine Casein Micelles. *Biochemistry,* 1972, vol. 11, 1818-1821
- **MARCHIN, S. ; PUTAUX, J-L. ; PIGNON, F. ; LÉONIL, J.** Effects of the environment factors on the casein micelle structure studied by cryo transmission electron microscopy and small-angle x-ray scatter/ultrasmall-angle x-ray scattering. *The Journal of Chemical Physics,* 2007, vol. 126, 045101-1, 045101-10
- **MARIETTE, F. ; TOPGAARD, D. ; JÖNSSON, B. ; SODERMAN, O.** H NMR Diffusiometry Study of Water in Casein Dispersions and Gels. *Journal of Agricultural and Food Chemistry,* 2002, vol. 50, 4295-4302
- **MCMAHON, D. J. ; OOMMEN, B. S.** Supramolecular Structure of the Casein Micelle. *Journal of Dairy Science,* 2008, vol. 91, 1709-1721
- **NEOCLEOUS, M. ; BARBANO, D. M. ; RUDAN, M. A.** Impact of Low Concentration Factor Microfiltration on Milk Component Recovery and Cheddar Cheese Yield. *Journal of Dairy Science,* 2002, vol. 85, 2415-2424
- **NEOCLEOUS, M. ; BARBANO, D. M. ; RUDAN, M. A.** Impact of Low Concentration Factor Microfiltration on the Composition and Aging of Cheddar Cheese. *Journal of Dairy Science,* 2002, vol. 85, 2425-2437
- **NELSON, B. K. ; BARBANO, D. M.** A Microfiltration Process to Maximize Removal of Serum Proteins from Skim Milk Before Cheese Making. *Journal of Dairy Science,* 2005, vol. 88, 1891-1900
- Ash, gravimetric determination in foods. *Nordisk Metodikkommitté For Livsmedel,* 2005
- **PEDERSEN, J. S.** Determination of Size Distributions from Hard-sphere Interactions. *Journal of Applied Crystallography,* 1994, vol. 27, 595-608
- **PEDERSEN, J. S.** a Flux- and background-optimized version of the NanoSTAR small-angle X-ray scattering camera for solution scattering. *Journal of Applied Crystallography,* 2004, vol. 37, 369-380
- **PERCUS, J.K. ; YEVICK, G.J.** *Physical Review,* 1958, vol. 110, 1-13
- **ROEFS, S. P. F. M. ; WALSTRA, P. ; DALGLEISH, D. G. ; HORNE, D. S.** Preliminary note on the change in casein micelles caused by acidification. *Netherlands Milk Dairy Journal,* 1985, vol. 39, 119-122
- **SOLANKI, G. ; RIZVI, S. S. H.** Physico-Chemical Properties of Skim Milk Retentates from Microfiltration. *Journal of Dairy Science,* 2001, vol. 84, 2381-2391
- **VAN BOEKEL, M. A. J. S. ; RIBADEAU-DUMAS, B.** Addendum to the Evaluation of the Kjeldahl Factor for Conversion of the Nitrogen-Content of Milk and Milk-Products to Protein-Content. *Netherlands Milk and Dairy Journal,* 1987, vol. 41, 281-284
- **WALSTRA, P. ; BLOOMFIELD, V. A. ; WEI, G. J. ; JENNESS, R.** Effect of Chymosin Action on the Hydrodynamic Diameter of Casein Micelles. *Biochimica et Biophysica Acta,* 1981, vol. 669, 258-259